# EUROPEAN PATENT SPECIFICATION

(11) **EP 1 428 098 B1**
(45) Date of publication and mention of the grant of the patent: **20.12.2006**
(21) Application number: 02753209.2
(22) Date of filing: 26.07.2002
(51) Int. Cl.: G06F 1/00

(54) **DEVICE AND METHOD FOR MANAGING CONTENT USAGE RIGHT**
EINRICHTUNG UND VERFAHREN ZUR VERWALTUNG DES INHALTSBENUTZUNGSRECHTS
PROCEDE ET DISPOSITIF DE GESTION DES DROITS D'UTILISATION DE CONTENUS

(30) Priority: 01.08.2001 JP 2001233813
(43) Date of publication of application: 16.06.2004
(73) Proprietor: MATSUSHITA ELECTRIC INDUSTRIAL CO., LTD., Kadoma-shi, Osaka 571-8501 (JP)
(72) Inventor: OOHO, Masahiro, Neyagawa-shi, Osaka 572-0055 (JP); INOUE, Mitsuhiro, Osaka-shi, Osaka 555-0011 (JP); TOKUDA, Katsumi, Ikeda-shi, Osaka 563-0038 (JP); UESAKA, Yasushi, Sanda-shi, Hyogo 669-1348 (JP)
(74) Representative: Holmes, Miles Keeton
(86) International application number: PCT/JP2002/007641
(87) International publication number: WO 2003/012609

(56) References cited:
- EP-A- 0 784 258
- EP-A- 0 836 132
- WO-A-01/09702
- WO-A-95/34857
- FR-A- 2 697 358
- US-A- 5 825 865
- US-A- 5 940 504

## Description

### Technical Field

The present invention relates to a device, a method and others for managing a usage right such as an expiration date of a license for using a content, a number of usage times, or usage time.

### Background Art

In recent years, business models for distributing contents on the Internet, distributing packaged contents attached to magazines or the like, as well as having users purchase licenses of the distributed contents, have become popular.

However, if illicit practices such as purchase of only one license of a content, unauthorized duplication and distribution of the content to others become widespread, interests of a content provider are unduly impaired.

Therefore, under these business models, measures are taken in order to protect the interests of the content provider. For example, a period of reproducing and viewing a content is limited to that up to an expiration date by embedding the expiration date determined by the license into the content to be installed to a personal computer of a user.

However, management of the expiration date is usually left to the user himself who purchased the content. As a result, a situation may arise that could make the user unable to use the content because the user does not notice that the expiration date has passed. The more the number of contents managed by the user is, the more these situations could arise.

It can be possible to manage the expiration date of the license on the user's terminal device in order to prevent this wasteful lapse of the usage period, but the heavy processing load is put on the terminal device for that management.

These situations could be generally true not only for the expiration date but also for the remaining amount of the usage right such as the number of usage times, or the usage time.

The american publication US 5,940,504 discloses a license management system which issues reply datagrams to a licences for approving or denying continuation of content image depending on a remaining amount of usage right. US 5,940,504 discloses the features of the preamble of independent claims 1 and 17.

International publication WO95/34857 and european publication EP 0784258 disclose notifying a user of a content when his content usage right is getting low to avoid usage descriptions.
The above cited publications do not cope with the situation where a user owns a number of terminals which are not always available.

Accordingly, the present invention is made in view of these circumstances, and aims at providing a device, a method and a program for dynamically determining a terminal device to which to send notification information indicating the remaining amount of usage right based on access history to the device.

### Disclosure of Invention

In order to achieve the above object, the present invention is specified by the content usage right management device according to independent claim 1 and the usage right management method and program according to independent claims 17 and 20.

### Brief Description of Drawings

These and other objects, advantages and features of the invention will become apparent from the following description thereof taken in conjunction with the accompanying drawings that illustrate a specific embodiment of the invention. In the Drawings:
Fig.1 is a diagram that shows the basic structure of a license management system 1a.
Fig. 2 is a block diagram that shows functions of a content provider terminal device 2, a content distribution center terminal device 3, a license management center terminal device 4a, and a user terminal device 5a.
Fig. 3 is a diagram that shows a format sample of a user table 411.
Fig. 4 is a diagram that shows a format sample of a license information table 421a.
Fig. 5 is a diagram that shows a flow of main processing of a license necessary for content usage in the license management system 1a, from the purchase of the license up to the expiration date of the license.
Fig. 6 is a timing chart of processing for preparing notice information on an expiration date by a notice information preparation unit 46a.
Fig. 7 is a diagram that shows a format sample of a license purchase screen.
Fig. 8 is a diagram that shows a display sample of notice information on the expiration date.
Fig. 9 is a block diagram that shows an overall structure of a license management system 1b according to the the present invention.
Fig. 10 is a diagram that shows a format sample of a notice condition setting screen 481.
Fig. 11 is a diagram that shows a format sample of a license information table 421b memorized in a license DB as shown in Fig. 9.
Fig. 12 is a diagram that shows a format sample of an access history table 431 memorized in an access history DB as shown in Fig. 9.
Fig. 13 is a diagram that shows a flow of main processing of the license in the license management system 1b, from the specification of the notice condition up to the renewal of the license.
Fig. 14 is a diagram that shows one of the characteristics of the license management system 1b that is realized by interaction in Steps S11~S13 as shown in Fig. 13.
Fig. 15 is a diagram that shows one of the characteristics of the license management system 1b that is realized by interaction in Steps S11~S13 as shown in Fig. 13.
Fig. 16 is a diagram that shows one of the characteristics of the license management system 1b that is realized by interaction in Steps S17 and S18 as shown in Fig. 13.
Fig. 17 is a diagram that shows one of the characteristics of the license management system 1b that is realized by interaction in Step S24 as shown in Fig. 13.

### Best Mode for Carrying Out the Invention

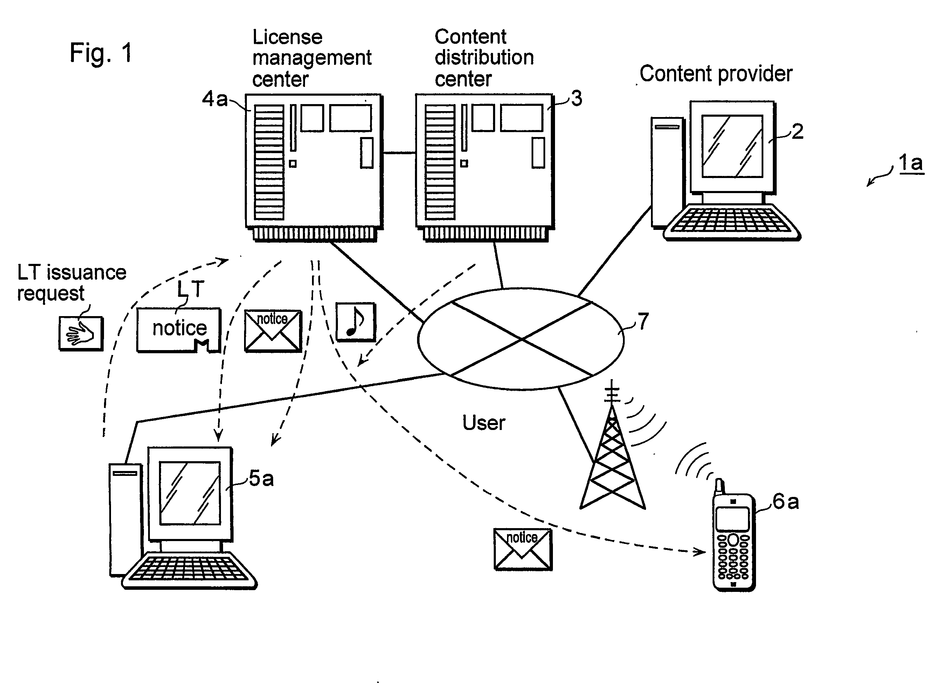

Fig.1 is a diagram that shows the basic structure of the license management system 1a. This license management system 1a is a communication system that manages a usage rule (license) of a content collectively at the side of a server, sends a license ticket (hereinafter referred to as an "LT") in which a part cut out of the usage rule (a cut-out usage rule) is stored to the terminal side in response to a user's request, and manages an expiration date determined by the license. The license management system 1a includes four types of terminal devices that are connected via a communication network 7 which enables a high-speed continuous connection such as the Internet, that is, a content provider terminal device 2 which is used by a content provider, a content distribution center terminal device which is used in a content distribution center, a license management center terminal device 4a which is used in a center that manages a license for using a content, and a user terminal device 5a which is used by a user who uses the content with the license, and a cellular phone 6a.

Contents include music, movies, books, etc., and are digitized, and encrypted in order to prevent unauthorized usage.

The content provider terminal device 2 is a computer device used by a content provider that provides a content, registers a usage rule and an effective period that are details of a license, and extends the expiration date that is the end of the effective period. The content provider terminal device 2 has a function of a Web browser to access the content distribution center terminal device 3 and the license management center terminal device 4a.

The content distribution center terminal device 3 is a computer device that distributes a content to a user in this license management system 1a, and has a Web page for accepting a registration of the content by the content provider.

The license management center terminal device 4a is a computer device used in a center that manages a license of a content granted in this license management system 1a. More specifically, the license management center terminal device 4a has a web page for accepting a purchase of a license from the user terminal device 5a, etc., accepting a license ticket issuance request (hereinafter referred to as an "LT issuance request") from the user terminal device 5a, etc. and issuing an LT including a content decryption key and a cut-out usage rule (one-time reproduction of the content in the present embodiment) to the terminal, and accepting a request for extending an expiration date from the user terminal device 5a, the cellular phone 6a and the content provider terminal device 2. In addition, the license management center terminal device 4a has a function as a mailer which notifies a terminal device for reproducing the content or a terminal device specified in advance by a user of notice information on an expiration date via e-mail, etc. when the expiration date is near at hand.

The user terminal device 5a and the cellular phone 6a is a computer device and a telephone for a user to receive distribution of a content to use it. More specifically, the user terminal device 5a and the cellular phone 6a is used as a device in the license management system 1a for receiving distribution of a content from the content distribution center terminal device 3, purchasing a license for using a predetermined content from the license management center terminal device 4a, making an LT issuance request including a client ID which is embedded in advance in the user terminal device 5a and a content ID of the content when the content is reproduced, decrypting the encrypted content with a content decryption key of the LT given from the license management center terminal device 4a so as to reproduce the content within a range of a cut-out usage rule of the LT. The user terminal device 5a and the cellular phone 6a further has a function as a Web browser, a mailer, etc. for accessing or communicating with the content distribution center terminal device 3 and the license management center terminal device 4a.

The cellular phone 6a operates as a notice terminal that receives e-mail indicating notice information on an expiration date of a license for using a predetermined content installed into the user terminal device 5a.

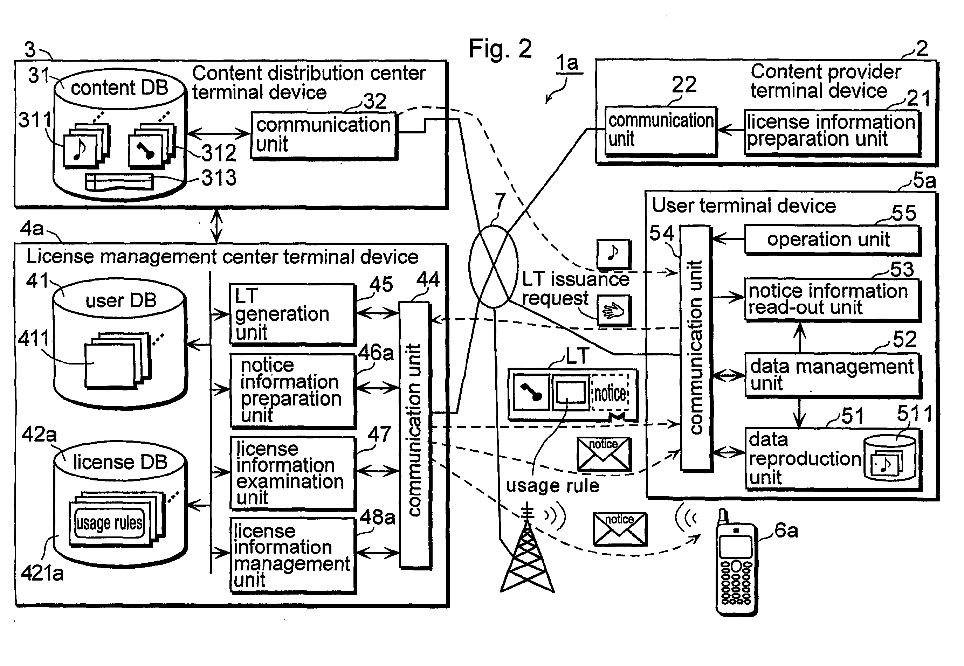

Fig. 2 is a block diagram that shows functions of the content provider terminal device 2, the content distribution center terminal device 3, the license management center terminal device 4a, and the user terminal device 5a. The cellular phone 6a that is a notice terminal and the communication network 7 are also shown in this figure.

The content provider terminal device 2 includes a license information preparation unit 21 and a communication unit 22.

The license information preparation unit 21 prepares license information (an effective period, for instance) for using a content in response to an operation of the content provider.

The communication unit 22 is a communication interface that communicates with the content distribution center terminal device 3 and the license management center terminal device 4a via the communication network 7 using browser software. The communication unit 22 distributes a content prepared by a content provider to the content distribution center terminal device 3 or distributes license information prepared by the license information preparation unit 21 to the license management center terminal device 4a.

The content distribution center terminal device 3 includes a content DB 31, a communication unit 32, etc.

The content DB 31 is a hard disk or the like that holds content tables 311 per content in which encrypted contents to be distributed in the license management system 1a and the corresponding content IDs that are the identifiers of these contents are stored, content decryption key tables 312 in which content decryption keys for decrypting the encrypted contents and the corresponding content IDs of the contents to be decrypted with these decryption keys are stored, and a content list table 313 in which "details of licenses", such as "song numbers" which correspond to the content IDs, "song titles" and effective periods of the contents, and the corresponding "sales prices" are stored. The details of the licenses are renewed by the license management center terminal device 4a, if necessary.

The communication unit 32 is a communication interface for communicating with the content provider terminal device 2, the user terminal device 5a and the cellular phone 6a, which is realized by a script, a program or the like described on a Web page. The communication unit 32 encrypts a content sent from a content provider of the content provider terminal device so as to store it in the content DB 31, prepares a content list screen based on the content list table 313 when a user of the user terminal device 51 accesses it so as to send the screen to the user terminal device 5a, and distributes the requested content in response to the request of downloading it.

The user terminal device 5a includes an operation unit 55, a communication unit 54, a data reproduction unit 51, a data management unit 52, a notice information read-out unit 53 that reads out the notice information on an expiration date, etc.

The operation unit 55 is a user interface that accepts user's operations, and displays Web pages of the content distribution center terminal device 3 and the license management center terminal device 4a.

The communication unit 54 is a communication interface that communicates with the content distribution center terminal device 3 and the license management center terminal device 4a via the communication network 7 using browser software, e-mail software, etc. The communication unit 54 analyzes a command or data sent from the content distribution center terminal device 3 and the license management center terminal device 4a, commissions the operation unit 55, the data reproduction unit 51, the data management unit 52 and the notice information read-out unit 53 to perform processing, and sends the data passed from the operation unit 55, the data reproduction unit 51 and the data management unit 52 to the content distribution center terminal device 3 and the license management center terminal device 4a.

More specifically, when a user downloads a content, the communication unit 54 accesses the content distribution center terminal device 3 to display the content list screen, requests the content specified by the user among the list to receive the distribution of the content via a Web, and stores the content in the content DB 511 of the data reproduction unit 51. When the user operates to purchase a license, the communication unit 54 accesses the license management center terminal device 4a, and registers the purchase of the license in the license management center terminal device 4a. When the user specifies a certain content and operates to reproduce the content, the communication unit 54 searches whether there is an LT in the data management unit 52 or not, and if there is no LT, it reads out the client ID from the data management unit 52 as well as the content ID of the content to be reproduced from the content DB 511 of the data reproduction unit 51, and makes an LT issuance request including the client ID and the content ID to the license management center terminal device 4a. Then, upon receiving the LT from the license management center terminal device 4a, it stores the received LT in the data management unit 52. When the communication unit 54 receives e-mail indicating notice information on an expiration date from the license management center terminal device 4a, it passes the notice information on the expiration date included in the e-mail to the notice information read-out unit 53. Furthermore, when the user operates to request the renewal of the expiration date, the communication unit 54 makes a renewal request of the expiration date including the content ID and the renewed period to the license management center terminal device 4a.

The data reproduction unit 51 includes a content DB 511 that stores and holds a content distributed from the content distribution center terminal device 3 or a content read out from a package along with the corresponding content ID. The data reproduction unit 51 decrypts the encrypted content with the content decryption key received from, the data management unit 52, and reproduces the content under the management of the data management unit 52.

The data management unit 52 holds the client ID predetermined for the user terminal device 5a, and memorizes the LT necessary for reproducing the content by the data reproduction unit 51 temporarily. Also, the data management unit 52 fetches a cut-out usage rule associated with the content ID (one-time reproduction of the content in this embodiment) and the content decryption key respectively from the LT received via the communication unit 54, and holds them temporarily. Then, the data management unit 52 passes the content decryption key to the data reproduction unit 51, monitors the data reproduction unit 51 whether it reproduces the content in compliance with the cut-out usage rule, and extinguishes the LT after the one-time reproduction ends. When the notice information on the expiration date is included in the LT, the data management unit 52 fetches this notice information on the expiration date and transfers it to the notice information read-out unit 53.

The notice information read-out unit 53 reads out the notice information on the expiration date included in the e-mail passed from the communication unit 54 and the notice information on the expiration date included in the LT passed from the data management unit 52, and displays them on a monitor or the like.

The license management center terminal device 4a includes two major units: data units (a user DB 41 and a license DB 42a) which are realized by a data file, etc. stored in a hard disk or the like, and processing units (a communication unit 44, an LT generation unit 45, a notice information preparation unit 6a, a license information examination unit 47 and a license information management unit 48a) which are realized by a script, a program, e-mail software, etc. described on a Web page.

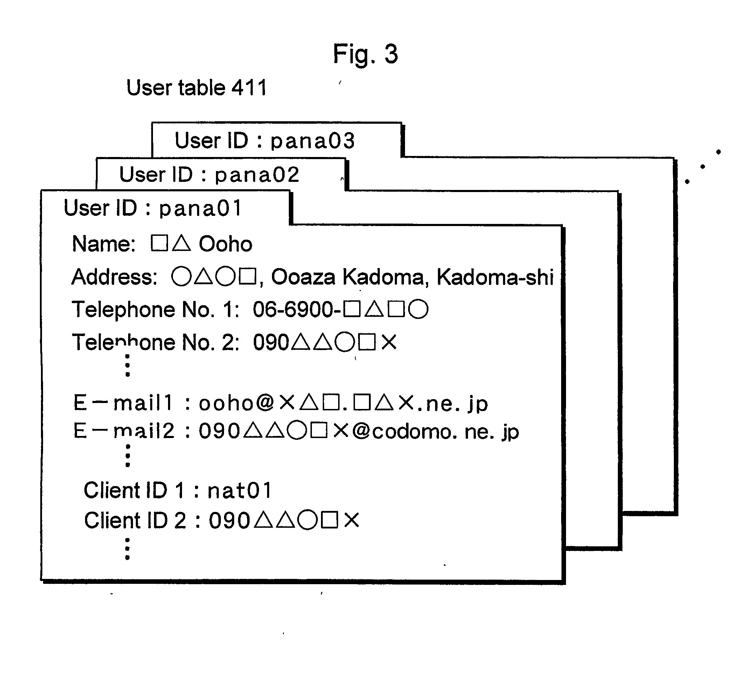

The user DB 41 is a memory unit like a hard disk that memorizes a plurality of user tables 411 for specifying a user ID of a user who owns a terminal device used in the license management system 1a based on a client ID specific to the terminal device. As shown in Fig. 3, the user table 411 accumulates and holds, per user ID, user information of a user who is a member of the license management system 1a ("name", "address", "telephone number 1", "telephone number 2", ...... "e-mail 1", "e-mail 2", ......) and information on a client ID of a terminal device used by the user in this license management system 1a ("client ID 1", "client ID 2", ......).

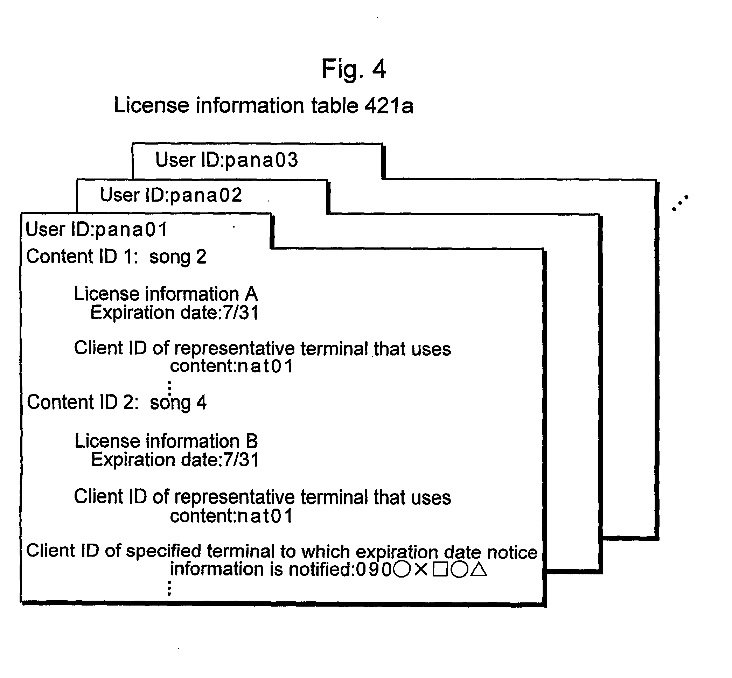

The license DB 42a is a memory unit like a hard disk that memorizes a plurality of license information tables 421a for managing a license purchased by a user per content, and notifying of the remaining number of days up to the expiration date of the license. As shown in Fig. 4, the license information table 421a accumulates and holds, per user ID and content ID, an expiration date of the license purchased by the user and a client ID of a representative terminal that uses the content (for example, a client ID of a terminal that purchased a license), and a client ID of a notified terminal to which the notice information on the expiration date is to be sent, if the user specifies another terminal. Even if a terminal is not specified as a main terminal for using a content in the license information table 421a, the terminal can use the license information as long as it is registered as the terminal of the user in the user table 411.

The communication unit 44 is a communication interface that communicates with the content provider terminal device 2, the user terminal device 5a and the cellular phone 6a via the communication network 7 according to a script and a program making up a Web page. The communication unit 44 analyzes a command sent from the content provider terminal device 2, the user terminal device 5a and the cellular phone 6a, commissions the LT generation unit 45, the notice information preparation unit 46a, the license information examination unit 47 and the license information management unit 48a to perform processing according to the analysis result, and sends the data passed from the LT generation unit 45 and the notice information preparation unit 46a to the user terminal device 5a and the cellular phone 6a.

The LT generation unit 45 issues an LT based on an LT issuance request received via the communication unit 44. More specifically, the LT generation unit 45 acquires a client ID and a content ID included in the LT issuance request. The LT generation unit 45 searches the user DB 41 and acquires the user ID corresponding to the client ID acquired from the user table 411. Then, the LT generation unit 45 specifies a usage rule (UR-Us) which is stored in the license information table 421a, granted by the content provider as a license and managed by the license management center terminal device 4a, based on the acquired user ID, content ID and client ID. The LT generation unit 45 cuts out a cut-out usage rule (UR-Uc) necessary for the terminal that made the LT issuance request (one-time reproduction of a content in this embodiment) from the specified usage rule (UR-Us), as well as accesses the content decryption key table 312 to read out a content decryption key corresponding to the content ID, and sends the LT including the content decryption key and the cut-out usage rule (UR-Uc) to the terminal that made the LT issuance request.

The license information examination unit 47 calculates the remaining number of days up to the expiration date with reference to the current date and hour indicated by an integrated calendar timer and the expiration date on the license information table 421a.

When the remaining number of days up to the expiration date calculated by the license information examination unit 47 becomes a predetermined threshold value or less, the notice information preparation unit 46a acquires all the LTs whose expiration dates are near at hand among the LTs generated by the LT generation unit 45, embeds the notice information on expiration date indicating the remaining numbers of days up to the expiration dates in these LTs. Then, the notice information preparation unit 46a sends the LTs in which the notice information on expiration date is embedded to the terminal that made the LT issuance request, or sends e-mail indicating the notice information on expiration date to the terminal devices that are to use the LTs whose expiration dates are near at hand, or a predetermined terminal device (a specified terminal).

More specifically, two different kinds of dates are preset in the notice information preparation unit 46a as threshold values for the remaining number of days up to the expiration date: an LT embedding start date for which "10" is set as the remaining number of days, and e-mail sending start date for which "5" is set as the remaining number of day is 5. When the remaining number of days up to the expiration date calculated by the license information examination unit 47 is 10 or less, the notice information preparation unit 46a acquires all the LTs whose expiration dates are near at hand among the LTs generated by the LT generation unit 45, embeds the notice information on expiration date indicating the remaining numbers of days in the LTs, and sends the LTs in which the notice information on expiration date is embedded to the terminal that made the LT issuance request.

Also, when the remaining number of days up to the expiration date calculated by the license information examination unit 47 becomes 5 or less, the notice information preparation unit 46a checks whether there is a specified terminal or not on the license information table 421a, and if there is no specified terminal, it sends e-mail indicating the notice information on expiration date to the terminal devices that are to use the LTs whose expiration dates are near at hand. And if there is a specified terminal, it sends e-mail indicating the notice information on expiration date to the specified terminal.

When there is a request from the content provider terminal device 2, the user terminal device 5a and others; the license information management unit 48a writes or renews the license information on the content list table 313 and the license information table 421a.

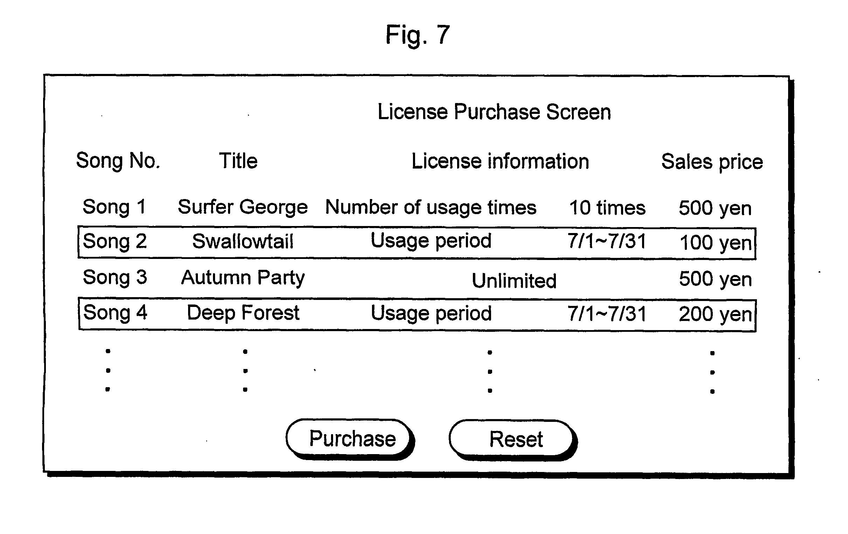

More specifically, when there is a request of purchasing a license from the user terminal device 5a, etc., the license information management unit 48a reads out the content list table 313 to prepare a license purchase screen as shown in Fig. 7, sends it to the user terminal device 5a and the cellular phone 6a, and accepts the purchase of the content on this license purchase screen. Then, the license information management unit 48a obtains the user ID based on the client ID of the terminal device, and registers the content ID of the content whose purchase is accepted, the license information, the client ID of the terminal to which the notice information is sent, etc. in the license information table 421a of the user ID per accepted license information. When there is a request of extending the expiration date from the user or the content provider, the license information management unit 48a extends the expiration date on the license information table 421a or renews the license information on the content list table 313.

Next, overall operation of the license management system 1a configured as above will be explained below.

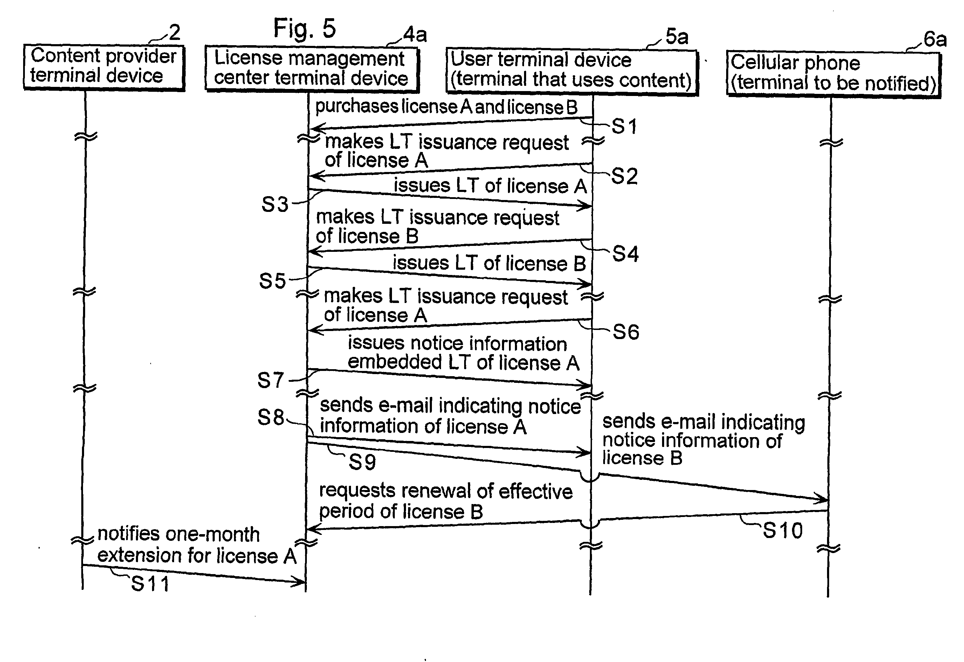

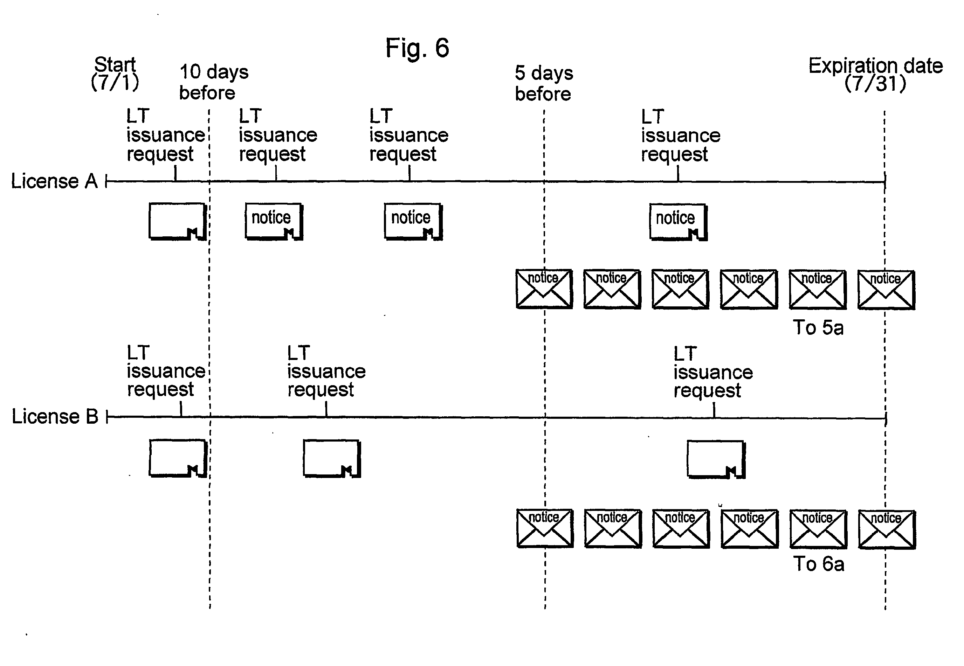

Fig. 5 is a diagram that shows a flow of main processing of a license necessary for using a content in the license management system 1a, from a purchase of the license up to the expiration date of the license. Fig. 6 is a timing chart of processing for preparing notice information on expiration date by the notice information preparation unit 46a.

Fig. 5 shows interactions between the user terminal device 5a, used by a user (□Δ Ooho) who has registered as a member, in which songs 2, 4 have been installed in advance, the cellular phone 6a which is specified as a notified terminal of the song 4, the license management center terminal device 4a, and the content provider terminal device 2 used by the provider of the song 4.

When a user accesses a license purchase page on the Web site placed on the license management center terminal device 4a using the user terminal device 5a, the license purchase screen is displayed as shown in Fig. 7. When the user (□Δ Ooho) of the user terminal device 5a purchases the license A of the song 2 "Swallowtail" and the license B of the song 4 "Deep Forest", he positions a cursor to the field of the song 2 by operating the communication unit 54 and pushes a purchase button so as to purchase the license A of the song 2, and further positions the cursor to the field of the song 3 and pushes the purchase button so as to purchase the license B of the song 4 (S1).

The license information management unit 48a of the license management center terminal device 4a, upon accepting the purchase of the licenses A and B, identifies the user ID "pana01" based on the client ID "nat01" of the user terminal device 5a on the user table 411. Then, the license information management unit 48a stores the song 2 and the song 4 respectively in the fields for content IDs on the license information table 421a, and stores the expiration date "July 31" of the song 2 and the song 4 respectively in the fields for the license information per content ID. Furthermore, the license information management unit 48a displays the terminals owned by the user (such as a "PC" and "cellular phone") corresponding to the client IDs on the user table 411 so as to have the user identify the representative terminal that uses the songs 2, 4, and stores the client ID "nat01". Also, the license information management unit 48a displays the devices owned by the user (such as a "cellular phone") other than the terminals that use the songs 2, 4 respectively so as to inquire of the user whether or not he specifies a device to which the information indicating that the expiration date of the songs 2, 4 is coming soon is notified. As a result of the inquiry, if the user specifies a device, the license information management unit 48a sets the specified device as a device to be notified and stores the client ID of the specified terminal (the telephone number "090○ × □○Δ", in the case of the song 4), and if the user does not specifies a device, it sets the representative terminal, and completes preparation of the license information table 421a leaving the field for the specified field blank, so as to prepare for the usage of the songs 2, 4.

Although the user specifies the representative terminal that uses the song 2 and the song 4 here, the terminal that purchases the licenses of the song 2 and the song 4 may automatically be determined as a representative terminal. That is why, in many cases, the terminal that purchases a license is generally determined as a representative terminal, and a troublesome operation for a user can be skipped if the representative terminal is automatically determined. Furthermore, although the representative terminal is determined as a notified terminal when the user does not specify the notified terminal, the present embodiment is not limited to this, and all the terminals owned by the user may be determined as the notified terminals. Since all the terminals can be determined as the notified terminals, the user can check the remaining rights of all the rights of his own on all the terminals of its own.

When the communication unit 54 of the user terminal device 5a accepts the operation of reproducing the song 2 by the user (□ Δ Ooho), it confirms that there is no LT of the song 2 in the data management unit 52, and then makes the LT issuance request along with the content ID "song 2" and the client ID "nat01" to the license management center terminal device 4a (S2).

The LT generation unit 45 of the license management center terminal device 4a that accepts the LT issuance request of the license A, searches the user table 411 so as to obtain the user ID "Pana01" based on the client ID "nat01", and searches the license information table 421 of the license DB 42a so as to confirm that the license information (UR-Us) managed by the license management center terminal device 4a is valid, that is, the expiration date has not yet passed, based on the user ID "pana01" and the content ID "song 2". Then, the LT generation unit 45 cuts out a cut-out usage rule (UR-Uc) (one-time in this case) of the song 2 on the user terminal device 5a, searches the content decryption key table 312, reads out the decryption key of the content ID "song 2", and sends the LT in which the cut-out usage rule and the decryption key are stored to the user terminal device 5a (S3).

In the above case, since the notice information preparation unit 46a confirms based on the notice from the license information examination unit 47 that more than 10 days remain up to the expiration date, there is no need to notify of the remaining number of days. Therefore, the notice information preparation unit 46a stops acquiring the LT from the LT generation unit 45.

The data management unit 52 of the user terminal device 5a that receives the issued LT of the license A cuts out the content decryption key and the cut-out usage rule from the LT, and passes the content decryption key to the data reproduction unit 51. The data reproduction unit 51 calls up the song 2 from the content DB 511 and decrypts it with the content decryption key, and reproduces the song 2 "Swallowtail" under the managementl of the cut-out usage rule of the data management unit 52.

When the communication unit 54 accepts operation of reproducing the song 4 by the user (□Δ Ooho), the communication unit 54 requests the license management center terminal device 4a to issue the LT of the license B (S4) as in the case of the song 2. Only the license and the content ID are different. The LT generation unit 45 of the license management center terminal device 4a issues the LT of the license B to the user terminal device 5a (S5). As a result, the data reproduction unit 51 calls up the song 4 from the content DB511 and decrypts it with the content decryption key, and reproduces the song 4 "Deep Forest" under the management of the cut-out usage rule of the data management unit 52.

This processing in Steps S2, S3, S4 and S5 is performed every time the user (□Δ Ooho) operates to reproduce the song 2 and song 4.

Then, the communication unit 54 accepts reproduction of the song 2 by the user (□Δ Ooho), and requests the license management center terminal device 4a to issue the LT of the license A (S6). When the remaining number of days up to the expiration date of the license under this request is 10 or less, the LT generation unit 45 of the license management center terminal device 4a issues the LT of the license A to the user terminal device 5a as usual (S6).

On the other hand, the license information examination unit 47 confirms that the remaining number of days up to the expiration date is 10 or less, and notifies the notice information preparation unit 46a of it. Upon receiving the notice, the notice information preparation unit 46a confirms that the client ID "nat01" of the unit to which the LT is to be issued is same as that of the unit to which the notice information on expiration date is notified with reference to the license information table 421a, acquires the LT issued by the LT generation unit 45, performs the processing of embedding the notice information on expiration date in the LT, and then sends that LT to the user terminal device 5a (S7). This kind of processing is performed until the expiration date has passed.

As a result, the data management unit 52 of the user terminal device 5a receives the LT, passes the content decryption key included in the LT to the data reproduction unit 51, and manages the reproduction of the song 2 by the data reproduction unit 51 under the cut-out usage rule. And, the data management unit 52 passes the notice information on expiration date included in the LT to the notice information read-out unit 53 to have it display the notice information on expiration date.

Accordingly, even if the user of the user terminal device 5a forgets that the license of the song 2 will expire on July 31, he can be notified without fail of the expiration date and the remaining number of days up to the expiration date according to the notice information on expiration date, during or after listening to the song 2 "Swallowtail". Furthermore, embedding the notice information on expiration date in the LT makes it possible to save the trouble of sending e-mail indicating the notice information on expiration date.

When the LT issuance request for the song 4 is made, the notice information preparation unit 46a stops acquiring the LT, even if the license information examination unit 47 confirms the remaining number of days up to the expiration date is 10 or less, because the unit to which the LT is issued is different from the unit to which the expiration date is notified.

Upon receiving the notice that the license A of the user terminal device 5a, that is, the remaining number of days up to the expiration date of the song 2 is 5 or less, from the license information examination unit 47, the notice information preparation unit 46a confirms that there is no filed for a specified terminal to which the remaining number of days up to the expiration date is to be notified in the license information table 421a, reads out e-mail address "ooho@ × Δ□.□Δ × .ne.jp" corresponding to the client ID "nat01" of the user terminal device 5a from the user table 411 of the user DB41, and sends e-mail indicating the notice information on expiration date of the license A to the e-mail address (S8). This e-mail is sent everyday until the expiration date has passed.

The notice information read-out unit 53 of the user terminal device 51 that receives this e-mail reads out the notice information on expiration date, and displays the expiration date and the remaining number days up to the expiration date on a monitor.

Accordingly, if the user does not reproduce the song 2, he can learn that the license A for the song 2 has almost expired, even if he forgets that it expires on July 31.

Also, upon receiving the notice that the license B of the user terminal device 5a, that is, the remaining number of days up to the expiration date of the song 4 is 5 or less, from the license information examination unit 47, the notice information preparation unit 46a confirms that there is a field for a specified terminal to which the remaining number of days up to the expiration date is to be notified in the license information table 421a, reads out e-mail address "0900 × □○Δ@codomo.ne.jp" corresponding to the client ID "090○ × □○Δ" of the cellular phone 6a from the user table 411 of the user DB41, and sends e-mail indicating the notice information on expiration date of the license B to the e-mail address (S9). This e-mail is sent everyday until the expiration date has passed.

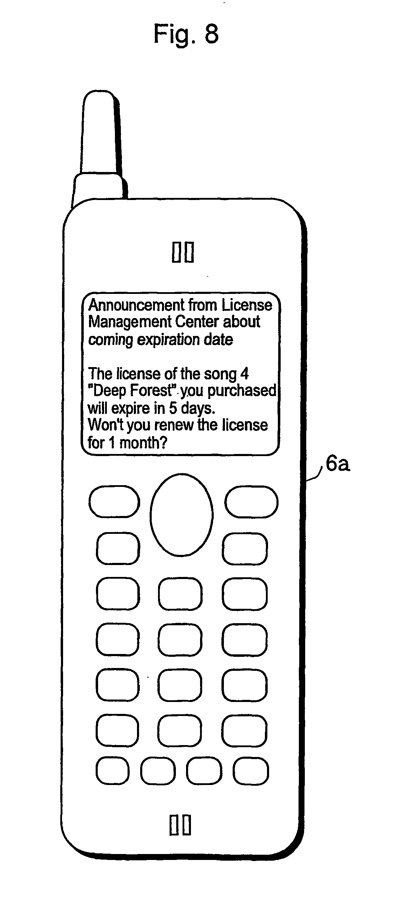

The cellular phone 6a, upon receiving this e-mail, reads out the notice information on expiration date, and displays the expiration date and the remaining number of days up to the expiration date, as shown in Fig. 8.

Accordingly, the user can read the notice information on expiration date in a place where he goes out even if he forgets that the license B of the song 4 will expire on July 31, and therefore, he can learn that the license B has almost expired.

The user who has learned that the license B has almost expired accesses the Web page of the license management center terminal device 4a on the Internet using the cellular phone 6a, and requests the renewal of the effective period (S10). Upon receiving the request for the renewal of the effective period, the license information management unit 48a of the license management center terminal 4a identifies the user ID based on the client ID of the cellular phone 6a, that is, the telephone number, and extends the effective period of the license B on the license information table 421a for one month, for example.

Accordingly, the license B of the song 4 is extended to August 31, and the user can listen to the song 4 until August 31.

Meanwhile, the license information management unit 48a, upon receiving the notice from the provider of the content (song 2) that the effective period of the license A is extended for one month as a service in a part of an event, reads out the content list table 313 from the content DB 31 of the content distribution center terminal device 3, and renews the effective period of the license A from "July 1~July 31" to "July 1~August 31". The license information management unit 48a further reads out the license information tables 421a for all the users who hold the license A, and renews the license A to "July 1~August 31".

Accordingly, the license A of the song 2 is extended up to August 31 even if the user himself does not request the renewal of the effective period of the license A, and therefore, the user can listen to the song 2 until August 31.

In the above first embodiment, the renewal of the effective period is accepted only before the expiration date. However, when the user who has received the notice information on expiration date makes the LT issuance request after the effective period has passed, the effective period may be renewed afterward, assuming that the user had the intention of renewing it. In this case, a complicated procedure such as re-purchase of a license can be saved, and thereby the burden on the user can be eased.

Also, in the first embodiment, if there is the LT issuance request for the song 4, the notice information preparation unit 46a stops acquiring the LT when it is confirmed that the remaining number of days up to the expiration date is 10. However, the notice information preparation unit 46a may perform processing of embedding the notice information on expiration date in an LT without stopping, and then, send the LT to the user terminal device 5a. In this case, opportunities for notifying that the license has almost expired can be increased.

The case where the cut-out usage rule is "one-time reproduction of the content" and the LT is consumed immediately has been explained. However, the cut-out usage rule may be "a plural-time reproductions of a content", or the data management unit 52 of the user terminal device 5a may store the acquired LT until the LT is actually consumed.

In this case, the end date, until which the LT determined under the cut-out usage rule can be used while it is stored in the data management unit 52, may be near at hand, because the user may not reproduce the content immediately after he acquires it, or the number of times of the cut-out usage rule is too many to use up. This end date is same as the expiration date of the usage right managed by the license management center terminal device 4b in some cases, but it could be earlier than the expiration date in other cases. This end date will hereinafter be referred to as the "usage end date of the LT" or the "end date". If this situation is left as it is, the acquired LT may become unworthy like a bad draft. Therefore, even in this situation, it is better to give notice in any way for more user-friendly system.

By the way, the license management center terminal device 4a has obtained information about which user terminal device 5a has acquired the LT for which content. The user terminal device 5a has also stored (managed) the acquired LT in the data management unit 52.

So, when the usage end date of the acquired LT is near at hand, the license management center terminal device 4a may send the notice (hereinafter also referred to as an "additional service notice") to the user terminal device 5a that the end date is coming soon. When the user terminal device 5a receives this notice, it may give a certain warning of the lapse of the usage end date for the acquired and unused LT by confirming whether there is the LT subject to the notice in the data management unit 52 or not.

Furthermore, in this case, it may be designed so as to distinguish this additional service notice from the regular notice (indicating that the expiration date is near at hand). If they are distinguished, the above processing can be skipped on the terminal device on which the processing load should not be put.

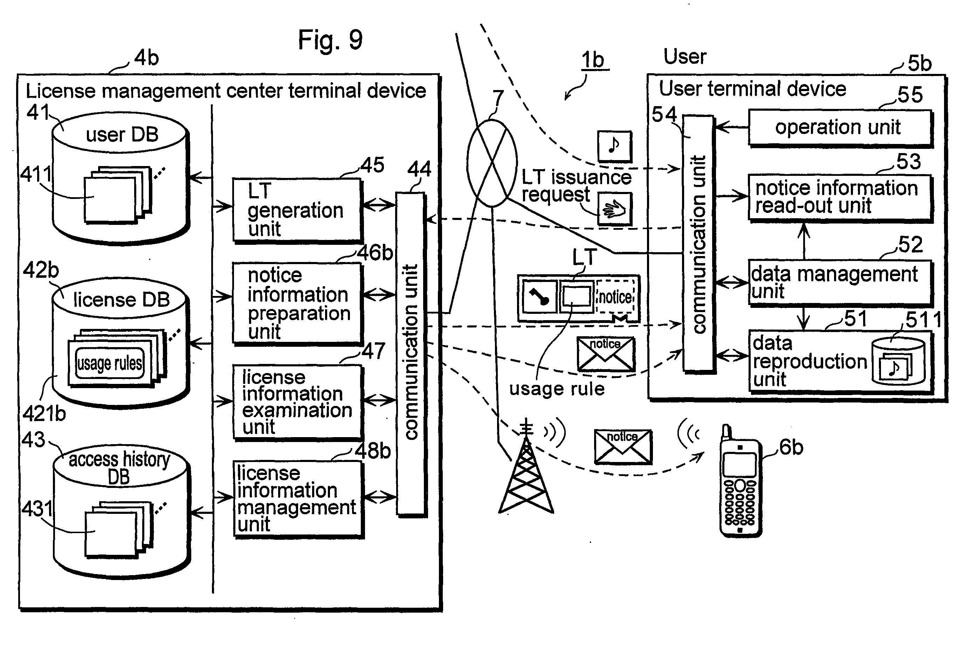

Fig. 9 is a block diagram that shows an overall structure of a license management system 1b according to the present invention.

This license management system 1b is different from the license management system 1a of figure 2 in that the license management system 1b sends the notice information not only on the remaining effective period but also the remaining number of reproduction times and the remaining reproduction time to the terminal, and that it can specify dynamically specified terminals, that is, the terminal which has accessed most recently and the terminal which has accessed most frequently in addition to the notified terminal fixedly specified by the user.

Since the content provider terminal device 2 and the content distribution center terminal 3 have the same structures as those shown in Fig. 2, they are not shown in Fig. 9. Also, the user terminal device 5b and the cellular phone 6b have the same structures as those shown in Fig. 2 except for the owners, explanation of their structures is omitted here.

The license management center terminal device 4b has the approximately same structure as that of the license management center terminal device 4a. However, the license management center terminal device 4b includes a license DB 42b instead of the license DB 42a, a notice information preparation unit 46b instead of the notice information preparation unit 46a, a license information management unit 48b instead of the license information management unit 48a, and an access history DB 43.

A content provider can put restrictions of usage time, number of usage times, etc. in addition to an effective period as details of license, and further put a combination of these restrictions of time and number of times. There is a case where one of a family or friends becomes a member so as to share usage of a content among them. In this case, the usage time or the number of usage times may be "0" because the license (usage right) of the content has been extinguished when the member user uses the content. Another family member or friend than the member user has used (reproduced) the content before he knows.

In order to avoid this situation, it may be considered that an agreement is made in advance about the number of usage times and the usage time among the family members or friends and the number of usage times and the usage time of a content is managed under the agreement. However, this kind of management is more complicated than that of the expiration date, and the agreement is often broken. Even in this case, it is desirable that the member user himself listens to the song last several times or plays the game for last several minutes. Accordingly, in the license management center terminal device 4b of the license management system 1b, the remaining number of usage times and the remaining usage time specified by the user are notified him in addition to the remaining days up to the expiration date (the remaining effective period). Also, when the remaining number of usage times and the remaining usage time in addition to the remaining effective period become threshold values specified by the user or less, they are notified the user. According to this notice, the member user can acquire the last usage right (license) just before the expiration quickly.

In the license management center terminal device 4b of an embodiment, the terminal which has accessed most frequently or the terminal which has accessed most recently can dynamically be specified among the terminals owned by the user member.

The license information management unit 48b of the license management center terminal device 4b, upon receiving a request of setting notice conditions from the user terminal device 5b or the cellular phone 6b, prepares a notice condition setting screen, and sends it to the terminal that made the request via the communication unit 44.

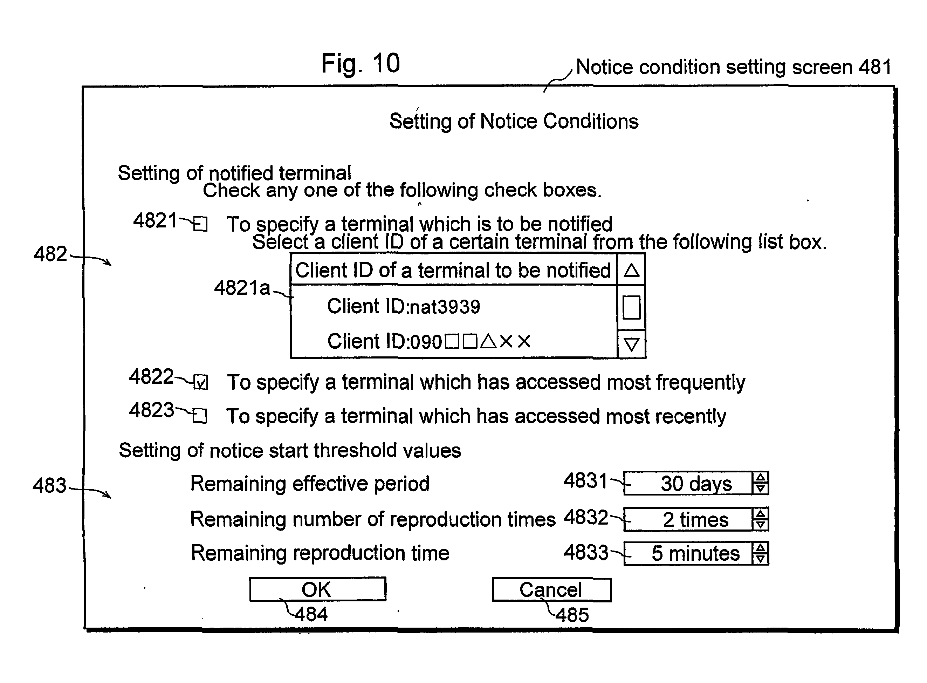

Fig. 10 is a diagram that shows a format sample of the notice condition setting screen 481.

The notice condition setting screen 481 mainly includes a notified terminal setting section 482, a notice start threshold value setting section 483, an OK button 484 and a cancel button 485, as shown in Fig. 10.

The notified terminal setting section 482 includes a check box 4821 for specifying a certain terminal, a check box 4822 for specifying a terminal which has accessed most frequently, and a check box 4823 for specifying a terminal which has accessed most recently. A user can check any one of these check boxes 4821~ 4823.

When the user checks the check box 4821, a list box 4821a for specifying a client ID of a terminal which is to be notified is activated, and a list of the client IDs of the user terminals which are owned by a user (Yukari Koara, for instance, (the user ID: pana72)) and registered in the user table 411 is displayed. The user can specify the terminal which is to receive the notice by positioning a cursor to the desired terminal in the list. When the terminal which has accessed the license management center terminal device 4b most frequently in a predetermined period of time (for the last one month in the second embodiment) is to receive the notice among the terminals owned by the user, the user checks the check box 4822. When the terminal which has accessed the license management terminal device 4b most recently is to receive the notice among the terminals owned by the user, the user checks the check box 4823.

More specifically, when the user exclusively uses a certain terminal among a lot of terminals, the terminal has accessed the license management center terminal device 4b most frequently, and the terminal varies with the seasons, etc., the user may specify the terminal which has accessed most frequently. If the terminal does not vary with the seasons, the user may specify the certain terminal. Also, if the user cannot determine a certain terminal because he uses a variety of terminals, he may specify the terminal which has accessed most recently.

The notice start threshold value setting section 483 includes a spin box 4831 for specifying the remaining effective period as a trigger for notice (a threshold value), a spin box 4832 for specifying the remaining number of reproduction times as a trigger for notice, and a spin box 4833 for specifying the remaining reproduction time as a trigger for notice, and the user can specify the desired numerical values by clicking delta symbols in all the spin boxes 4831 ~4833 or by entering the values there directly.

When the user clicks the OK button 484, the license information management unit 48b acquires the details set on the notified terminal setting section 482 and the details set on the notice start threshold value setting section 483 via the communication unit 44, and registers the acquired details in the license information table 421b of the license DB 42b.

The license DB 42b is a memory unit such as a hard disk that memorizes a plurality of license information tables 421b.

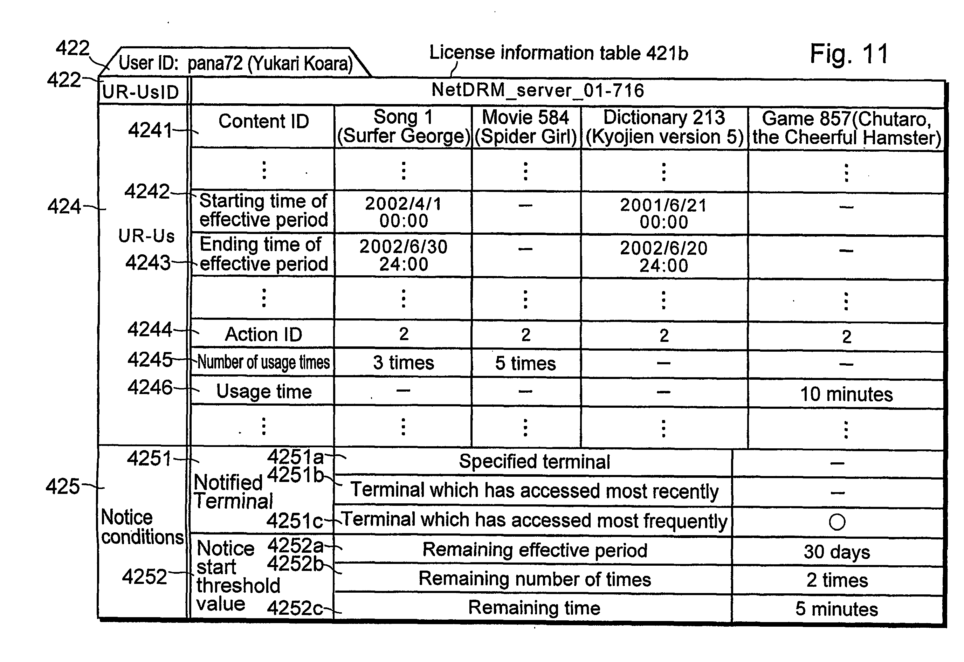

Fig. 11 is a diagram that shows a format sample of the license information table 421b memorized in the license DB42. Note that "-" indicated in this figure means "unspecified" or "unlimited".

The license information table 421b is a table for managing a license purchased by a user per user (user ID) or managing the remaining amount up to the expiration of the license (such as the remaining number of days up to the expiration date of the license) per user ID. The license information table 421b mainly includes records of a user ID 422 ("pana72" (for Yukari Koara), for instance), a UR-Us ID 423 that is an identifier given to the details of the license (usage rules) "UR-Us" managed by the license management center terminal device 4b ("NetDRM_server_01-716", for instance), a UR-Us 424, and a notice condition 425.

The UR-Us 424 includes a content ID 4241 for specifying a content subject to the license, a starting time of effective period 4242 of the license, an ending time of effective period 4243 of the license, an action ID 4244 for identifying a content usage manner (an action such as reproduction and printing), a number of usage times 4245 indicating the remaining number of content usage times, usage time 4246 indicating the remaining content usage time, and others.

The period between the starting time of effective period 4242 and the ending time of effective period 4243 is the effective period. However, a shorter effective period can be specified for an LT than for a UR-Us. For example, one day can be specified for the LT though the UR-Us is effective for one month. Also, when the expiration date is not set, "unlimited" may be stored in the starting time of effective period 4242 and the ending time of effective period 4243.

In the action ID 4244, "2" is stored in the case of reproducing a content, and "5" is stored in the case of printing a content, respectively.

As for the values of the number of usage times 4245 and the usage time 4246, the initial values are subsequently decremented by a usage rule or license information cut out in response to a user's LT issuance request.

For example, when the user Yukari Koara (user ID "pana72") purchases the usage rights of four contents, the song 1 "Surfer George", the movie 584 "Spider Girl", the dictionary 213 "Kyojien, version 5", and the "Chutaro, the Cheerful Hamster", the initial value (UR-C) determined by the content provider or the server manager per content depending upon the attributes of the content is stored in each record of the content ID 4241~the usage time 4246. The number of usage times and the usage time decrease as these contents are used. In Fig. 11, the usage rules as of June 7, 2002 which are managed by the license management center terminal device 4b are shown.

The notice condition 425 is a record for holding a notice condition specified by the user on the notice condition setting screen 481. It includes records of a notified terminal 4251 that holds information set in the notified terminal setting section 482 of the notice condition setting screen 481, and a notice start threshold value 4252 that holds information set in the notice start threshold value setting section 483 .

The notified terminal 4251 includes three records, a specified terminal 4251a, a terminal which has accessed most recently 4251b, and a terminal which has accessed most frequently 4251c. The notice start threshold value 4252 includes three records, a remaining effective period 4252a, a remaining number of times 4252b and remaining time 4252c.

In the sample as shown in Fig. 10, since the check box 4822 indicating "To specify a terminal which has accessed most frequently" is checked, "O" indicating "effective" is stored in the record of the terminal which has accessed most frequently 4251c, and "-" indicating "unspecified" is stored in the records of the specified terminal 4251a and the terminal which has accessed most recently 4251b, respectively. Also, in Fig. 10, since "30 days", "2 times" and "5 minutes" are respectively specified in the spin box 4831 indicating the remaining effective period, the spin box 4832 indicating the remaining number of reproduction times, and the spin box 4833 indicating the remaining reproduction time, "30 days", "2 times" and "5 minutes" are respectively stored in the records of the remaining effective period 4252a, the remaining number of times 4252b, and the remaining time 4252c.

When, in the notice condition setting screen 481, the check box 4821 indicating "To specify a terminal which is to be notified" is checked and the client ID of the terminal which is to be notified is specified in the list box 4821a, the client ID is stored in the record of the specified terminal 4251a. Also, when the check box 4823 indicating "To specify a terminal which has accessed most recently" is checked, "O" indicating "effective" is stored in the record of the terminal which has accessed most recently 4251b.

The access history DB 43 holds the access history table 431 per user (user ID) for managing the access history information for each terminal owned by the user.

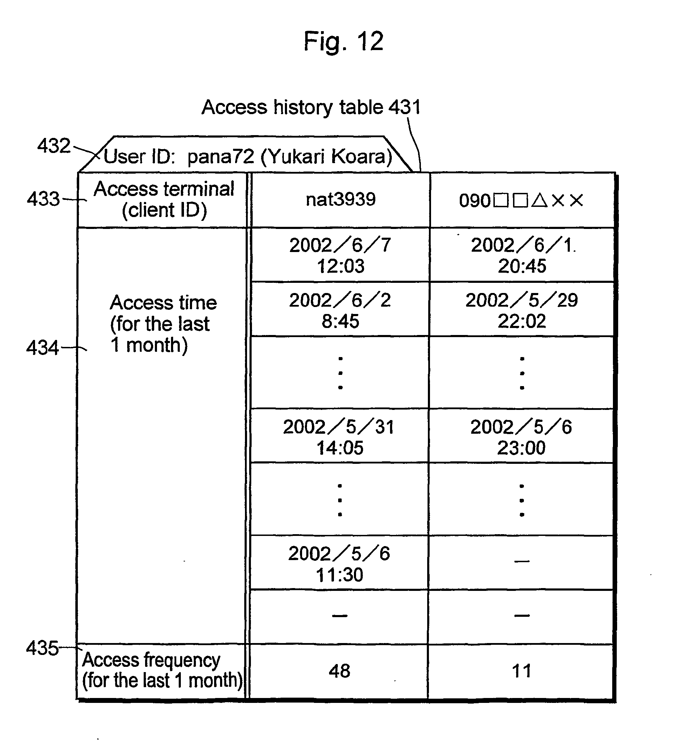

Fig. 12 is a diagram that shows a format sample of the access history table 431. "-" in this figure means that no data of access date and time is stored.

As shown in Fig. 12, the access history table 431 includes a user ID 432 that is a record which stores a user ID, an access terminal 433 that is a record which can store a plurality of access terminals (client IDs), an access time 434 that is a record which can store a plurality of access times per client ID, and an access frequency 435 that is a record which stores access frequency per client ID.

When the license information management unit 48b is accessed by a terminal as an LT issuance request and a license renewal request, it acquires the client ID ("nat3939", for instance) included in these requests and the corresponding user ID ("pana72" (Yukari Koara), for instance), stores the data of access time (2002/6/7 12:03, for instance) on the top record of the access time 434, and shifts the older data of access time (2002/6/2 8:45, ......, for instance) to the lower record one by one. Then, it increments the data of the access frequency 435 by "1". The license information management unit 48b deletes the one-month or older data of the access time 434, and decrements the data of the access frequency 435 by the deleted one. The other structures of the license information management unit 48b than the above are same as those of the license information management unit 48a of the first embodiment.

This access history table 431 enables to find easily the terminal which has accessed most frequently or the terminal which has accessed most recently among the terminals used by the user (Yukari Koara), and determine the terminal to be notified dynamically based on the access history information.

The notice information preparation unit 46b searches the license information table 421b of each user on a regular basis, and acquires the user's usage rights of which remaining amount is less than threshold value. That is, the notice information preparation unit 46b acquires the usage rights per content ID of each user on a regular basis, whose remaining time up to the expiration date calculated by the license information examination unit 47 is less than the threshold value (remaining effective period) specified by the user, remaining number of usage times is smaller than the threshold value (remaining number of times) specified by the user, and remaining usage time is less than the threshold value (remaining time) specified by the user. When the LT generation unit 45 sends an LT, the notice information preparation unit 46b judges whether the client ID of the terminal to which the LT is sent is identical or not to that of the notified terminal specified by the user (the specified terminal, the terminal which has accessed most recently, or the terminal which has accessed most frequently). When they are identical, the notice information preparation unit 46b embeds (attaches) the notice information that is a message including the remaining amount or recommendation of license renewal into the LT generated by the LT generation unit 45, if there are the usage rights whose remaining amount is less than the threshold values among the usage rights owned by the user of the terminal to which the LT is sent. Also, the notice information preparation unit 46b sends e-mail indicating the notice information to the notified terminal specified by the user (the specified terminal, the terminal which has accessed most recently, or the terminal which has accessed most frequently).

Although the notice information preparation unit 46a uses different threshold values for an LT and e-mail, the notice information preparation unit 46b uses the same threshold value for both of them. The other structures of the notice information preparation unit 46b than the above are same as those of the notice information preparation unit 46a.

Next, overall operations in the license management system 1b configured above will be explained below.

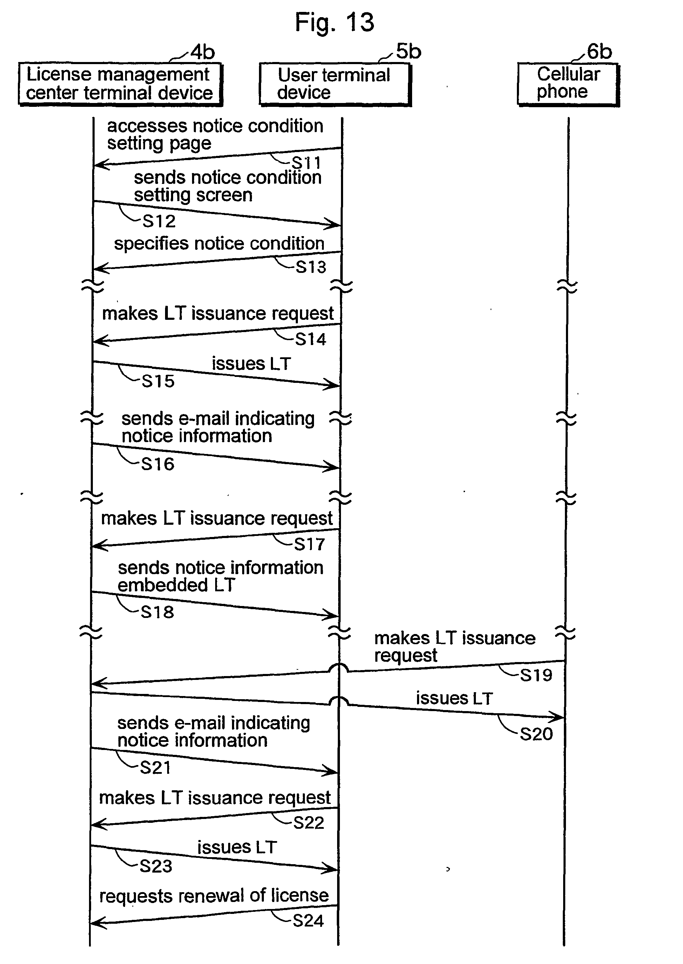

Fig. 13 is a diagram that shows a flow of main processing in the license management system 1b from specification of a notice condition up to renewal of a license. The processing of preparing the notice information by the notice information preparation unit 46b is almost same in both cases of using an LT and e-mail, the timing chart is not shown here.

Fig. 13 shows interactions between the user terminal device 5b, the cellular phone 6b used by the user (Yukari Koara) who has registered as a member and the license management center terminal device 4b. The following explanation will be done on the assumption that the user terminal device 5b and the cellular phone 6b used by the user (Yukari Koara) have already been registered and the license necessary for using a content has already been purchased.

When the user accesses a notice condition setting page on the Web site placed on the license management center terminal device 4b using the user terminal device 5b (S11), the notice condition setting screen as shown in fig. 10 is sent from the license management center terminal device 4b to the user terminal device 5b (S12), and displayed on the monitor of the user terminal device 5b. When the user "Yukari Koara" of the user terminal device 5b specifies the notified terminal setting section 482 and the notice start threshold value setting section 483, and clicks the OK button 484, the information specifying the notice condition is sent from the user terminal device 5b to the license management center terminal device 4b (S13).

Upon receiving the specification of the notice condition, the license information management unit 48b of the license management center terminal device 4b identifies the user ID "pana72" based on the client ID "nat3939" of the user terminal device 5b on the user table 411. The license information management unit 48b stores any one of the specified terminal, the terminal which has accessed most recently, and the terminal which has accessed most frequently in the field of the notified terminal 4251 of the license information table 421b, and stores the remaining effective period, the remaining number of times and the remaining time in the fields of the notice start threshold value 4252 respectively. Furthermore, when either the terminal which has accessed most recently or the terminal which has accessed most frequently is specified as the notified terminal 4251, the license information management unit 48a prepares the access history table 431 for the user ID "pana72" in the access history DB43 for the access to the user terminal device 5b or the cellular phone 6b.

When the communication unit 54 of the user terminal device 5b receives an operation to reproduce a content (the song 1, for instance) performed by the user "Yukari Koara" or her family member, the communication unit 54 confirms that there is no LT of the song 1 in the data management unit 52, and then requests the license management center terminal device 4b to issue the LT along with the content ID "song 1" and the client ID "nat3939" (S14).

Upon receiving the LT issuance request of the content ID "song 1", the LT generation unit 45 of the license management center terminal device 4b searches the user table 411 and obtains the user ID "pana72" based on the client ID "nat3939". The LT generation unit 45 further searches the license information table 421b of the license DB42b, confirms that the license information (UR-Us) managed by the license management center terminal device 4b is effective, that is, the expiration date has not yet passed and the number of usage times remains (it is not "0") based on the user ID "pana72" and the content ID "song 1", and then, cuts out the cut-out usage rule (UR-Uc) of the song 1 on the user terminal device 5b (one time, for instance), searches the content decryption key table 312, and reads out the decryption key of the content ID "song 1". Then, it issues the LT in which the cur-out usage rule and the decryption key are stored to the user terminal device 5b (S15).

Since the notice information preparation unit 46b confirms that the remaining amount of the usage rules for the contents ("Surfer George", "Spider Girl", "Kyojien version 5", and "Chutaro, the Cheerful Hamster" used by the user "Yukari Koara" are all more than the threshold values, it stops embedding the notice information to the LT. Also, the license information management unit 48b, if necessary, stores the access time of the access terminal 433 (client ID: nat3939) on the top field of the access time 434 of the access history table 431 prepared for the user "Yukari Koara", and increments the numerical value in the field of the access frequency 435.

Processing in Step S14 and S15 is performed every time the user "Yukari Koara" or her family member reproduces the song 1, the movie 584, the dictionary 213 or the game 857 on the user terminal device 5b or the cellular phone 6b.

As described above, the notice information preparation unit 46b searches the license information table 421b of each user on a regular basis, and acquires the usage rights whose remaining amount is less than the threshold values based on the detection by the license information examination unit 47. For example, on May 21, 2002, the notice information preparation unit 46b detects the remaining amount up to the expiration date of the content "Kyojien version 5" used by the user "Yukari Koara", that is, 30 days, the threshold value specified by the user. Since there is no LT issuance request from the user "Yukari Koara" and her family member on that day, the notice information preparation unit 46b prepares notice information and sends it to the notified terminal specified by the user (the terminal which has accessed most frequently at this time, for example, the user terminal device 5b in this case) by e-mail (S16). This notice information includes a message "The effective period of the license of the dictionary 213 "Kyojien version 5" you purchased will expire in 30 days. Won't you renew the license (to the expiration date: June 20, 2003, 1,500 yen)? Only the users who renew their licenses on this notice are entitled to the special bonus of renewing the license to the new version (the expiration date: June 20, 2003) upon release of "Kyojien version 6" (to be available on October 1, 2002)", for example. This processing is performed everyday until the usage right of the content "Kyojien" will expire.

Accordingly, the user can learn that the license will expire soon even he forgets the expiration date of the license for the dictionary 213, June 20, 2002 because he does not use the dictionary 213.

If the user "Yukari Koara" or her family member operates the user terminal device 5b on June 7, 2002 to reproduce the movie 584 "Spider Girl" without renewing the license of the dictionary 213, the communication unit 54 of the user terminal device 5b confirms that there is no LT of the movie 584, and then requests the license management center terminal device 4b to issue the LT (S17). The LT generation unit 45 of the license management center terminal device 4b confirms that the license information (UR-Us) of the movie 584 is effective, and then issues the LT for the content "Spider Girl" to the user terminal device 5b as usual (S18). Meanwhile, the notice information preparation unit 46b searches the license information table 421b, and acquires the remaining amount up to the expiration date of the two contents "Kyojien version 5" and "Surfer George" used by the user "Yukari Koara", that is smaller than 30 days, the threshold value specified by the user, and prepares the notice information. Then, the notice information preparation unit 46b confirms that the client ID "nat3939" of the terminal to which the LT is to be issued is same as that of the terminal to which the notice information is to be sent (the terminal which has accessed most frequently in this case) with reference to the license information table 421b, and then embeds the prepared notice information in the LT issued by the LT generation unit 45. The LT in which the notice information is embedded is sent by the LT generation unit 45 (S18). That is, the notice information of the content irrelevant to the content for that LT is also embedded in the LT.

Accordingly, the data management unit 52 of the user terminal device 5b receives the LT, passes the content decryption key included in the LT to the data reproduction unit 51, and manages reproduction of the movie 584 "Spider Girl" on the data reproduction unit 51. And the data management unit 52 passes the notice information included in the LT to the notice information read-out unit 53 to have it display the notice information.

This notice information includes, in addition to the message of the notice information of "Kyojien", a message "The effective period of the license of the song 1 "Surfer George" you purchased will expire in 30 days. Won't you renew the license (to the number of usage times: 10, the expiration date: July 31, 2002)? Only the users who renew their licenses on this notice are entitled to the special bonus of extending the effective period of the current usage rights (the number of usage times: 3, the expiration date: June 30, 2002) to July 31, 2002", for example.

Accordingly, the user of the user terminal device 5b can confirm with this notice information the expiration date and the remaining number of days up to the expiration date without fail during or after seeing the movie 584 "Spider Girl", even if the user forgets that the license for the dictionary 213 will expire on June 20, 2002 and the license for the song 1 will expire on June 30, 2002. Also, since the notice information is embedded in the LT, the need to send e-mail indicating the notice information can be saved.

This processing is performed until the usage rights extinguish as long as the notified terminal is identical to the terminal to which the LT is to be issued. Also, when the notified terminal is different from the terminal to which the LT is to be issued, or there is no LT issuance request, the notice by e-mail is given as in the case of the above Step S16.

Assume that while the user "Yukari Koara" is seeing the movie 584 "Spider Girl" on June 7, 2002, her family member (her son, Bunmei Koara) reproduces the content "Chutaro, the Cheerful Hamster" (content ID: game 857" for 5 minutes using her cellular phone 6b without her permission.

In this case, the communication _unit of the cellular phone 6b confirms that there is no LT of the game 857, and then requests the license management center terminal device 4b to issue the LT (S19). The LT generation unit 45 of the license management center terminal device 4b confirms that the license information (UR-Us) of the game 857 is effective (the usage time: 10 minutes), and then issues the LT of the content "Chutaro, the Cheerful Hamster" to the cellular phone 6b as usual (S20). Accordingly, the data management unit of the cellular phone 6b receives the LT, passes the content decryption key included in the LT to the data reproduction unit, and manages reproduction of the game 857 "Chutaro, the Cheerful Hamster" on the data reproduction unit under the cut-out usage rule (usage time: 5 minutes). Therefore, Bunmei Koara can enjoy the game 857 "Chutaro, the Cheerful Hamster" on the cellular phone 6b.

Meanwhile, the license information management unit 48b subtracts cut-out 5 minutes from 10 minutes, and renews the usage time under the license information (UR-Us) of the game 857 to "5". The notice information preparation unit 46b searches the license information table 421b of the user "Yukari Koara", and acquires the remaining usage time of the content "Chutaro, the Cheerful Hamster", that is, 5 minutes, the threshold value specified by the user. As mentioned above, when the new notice information appears after the notice information is sent, the notice information preparation unit 46b sends e-mail indicating the notice information to the notified terminal specified by the user (the terminal which has accessed most frequently in this case, the user terminal device 5b) (S21).

This notice information includes a message, "The usage time of the game 857 "Chutaro, the Cheerful Hamster" you purchased will run out in 5 minutes. Won't you renew the license (to the usage time: 100 minutes, 500 yen)? Only the users who renew their licenses on this notice are entitled to the special bonus of getting extra usage right (i.e., extending the usage time for 10 minutes) of 'Chutaro, the Cheerful Hamster"', for example. This processing is performed everyday until the usage right of the content "Chutaro, the Cheerful Hamster" expires.

The user "Yukari Koara" who is seeing the movie 584 "Spider Girl" notices that e-mail has arrived, and learns from the e-mail that the usage time of the game 857 "Chutaro, the Cheerful Hamster" will run out in 5 minutes. The user "Yukari Koara" stops viewing "Spider Girl" in haste, and reproduces the content "Chutaro, the Cheerful Hamster" (content ID: game 857) for 5 minutes on the user terminal device 5b.

In this case, the communication unit 54 of the user terminal device 5b confirms that there is no LT of the game 857, and then requests the license management center terminal device 4b to issue the LT (S22). The LT generation unit 45 of the license management center terminal device 4b confirms that the license information (UR-Us) of the game 857 is effective (the usage time remains for 5 minutes), and then issues the LT of the content "Chutaro, the Cheerful Hamster" to the user terminal device 5b as usual (S23). Then, the data management unit 52 of the user terminal device 5b receives the LT, passes the content decryption key included in the LT to the data reproduction unit, and manages reproduction of the game 857 "Chutaro, the Cheerful Hamster" on the data reproduction unit 51 under the cut-out usage rule (usage time: 5 minutes). As a result, the user "Yukari Koara" can enjoy the game 857 "Chutaro, the Cheerful Hamster" on the user terminal device 5b.

Accordingly, since the user terminal device 5b sends the e-mail indicating the remaining usage time of the content "Chutaro, the Cheerful Hamster" to the terminal which has accessed most frequently, the member user "Yukari Koara" who uses the terminal can acquire quickly the last usage right just before the expiration of it (5 minutes), even if the user and her family do not manage the usage time of the content "Chutaro, the Cheerful Hamster".

In the case of the content "Surfer George", restrictions are put on both the expiration date and the number of usage times. When the remaining number of usage times becomes "2", the notice information preparation unit 46b of the license management center terminal device 4b sends e-mail indicating the notice information to the notified terminal specified by the user (the terminal which has accessed most frequently at that time, the user terminal device 5b, in this case), or sends the notice information in which the LT is embedded. This notice information includes a message, for example, "The expiration date of the song 1 "Surfer George" you purchased is ×× ×, and the remaining number of usage times is 2. Won't you renew the license (to the expiration date: July 31, 2002, the number of usage times: 10, 500 yen)? Only the users who renew their licenses on this notice are entitled to the special bonus of using the remaining license you owns now (the expiration date: June 30, 2002, the number of usage times: 2) even during the renewed effective period." This processing is performed everyday until the usage right of the content "Chutaro, the Cheerful Hamster" expires.

Upon receiving the notice information, the user "Yukari Koara" is attracted by the very advantageous special bonus, and executes the procedure of renewing (or purchasing) the new licenses of the contents, "Surfer George", "Kyojien, version 5", and "Chutaro, the Cheerful Hamster". In this case, the communication unit 54 of the user terminal device 5b requests the license management center terminal device 4b to renew (purchase) these contents (S24). The license information management unit 48b of the license management center terminal device 4b rewrites the license information (UR-Us) of the contents whose renewal is requested, and prepares for the LT issuance request from the user terminal device 5b or the cellular phone 6b.

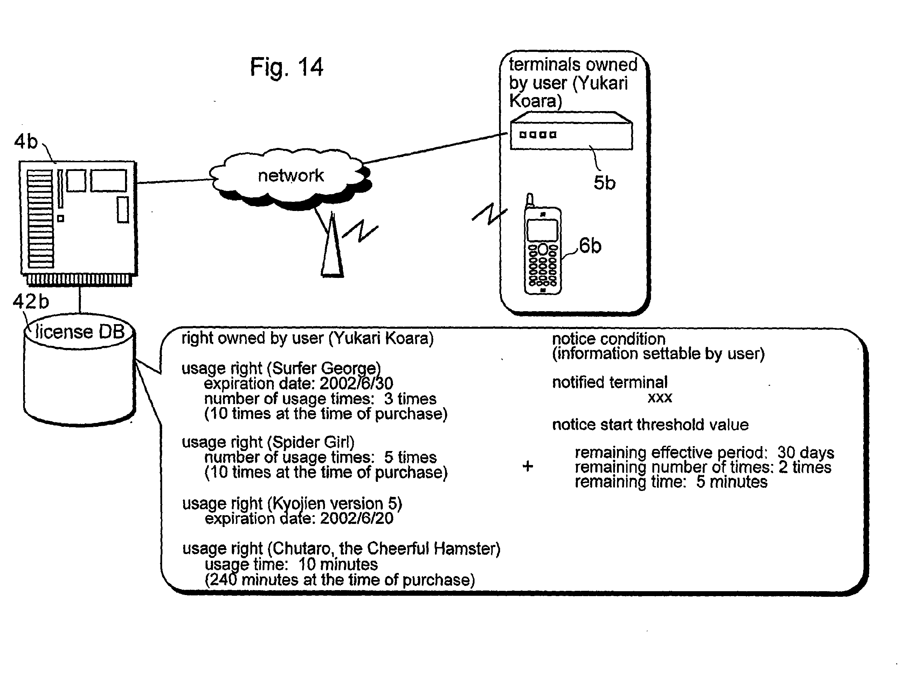

Fig. 14 is a diagram that shows one of the characteristics of the license management system 1b that is realized by interactions in the above Steps S11~S13. This figure shows the case where the server (the license management center terminal device 4b) sends the notice information to the terminals depending upon the rights the server itself manages (the effective period, the remaining number of reproduction times, and the remaining reproduction time).

The license management center terminal device 4b of the license management system 1b sends the notice condition setting screen 481 (S12), and accepts the notice start threshold value specified by the user (the remaining effective period, the remaining number of times, and the remaining time) (S13). The server (the license management center terminal device 4b) sends the notice information to the terminals depending upon the rights the server itself manages (the effective period, the remaining number of reproduction times, and the remaining reproduction time), that is, the remaining amount of the rights.

Accordingly, the expiration of the right without the user's knowledge can be prevented when the user has not used the right for a while or the user's family members share the usage. Also, since the threshold value can be determined per parameter of the right status such as the effective period, the remaining number of reproduction times and the remaining reproduction time, it can be suited to the user's attributes.

In an embodiment, the user can specify the same thresholds of the remaining number of usage times, the remaining effective period and the remaining usage time for all the contents, regardless of the content to be used. However, the threshold values of the remaining number of usage times, the remaining effective period and the remaining usage time may be specified per content to be used. In this case, they can be suited to the attributes of the individual content.

Also, in an embodiment, the notice is given when any one of the remaining number of usage times, the remaining effective period and the remaining usage time reaches the threshold value. However, the threshold value may be determined according to priority or by AND operation of two or more of the remaining number of usage times, the remaining effective period and the remaining usage time.

Those who can manage the remaining number of usage times, the remaining effective period and the remaining usage time may input "0" in these threshold values. By doing so, he can stop sending the notice information to the terminal. Also, he can receive the notice information of the remaining effective period only, or the remaining number of times only depending upon in which field he inputs "0" as the threshold values of the remaining number of usage times, the remaining effective period and the remaining usage time.

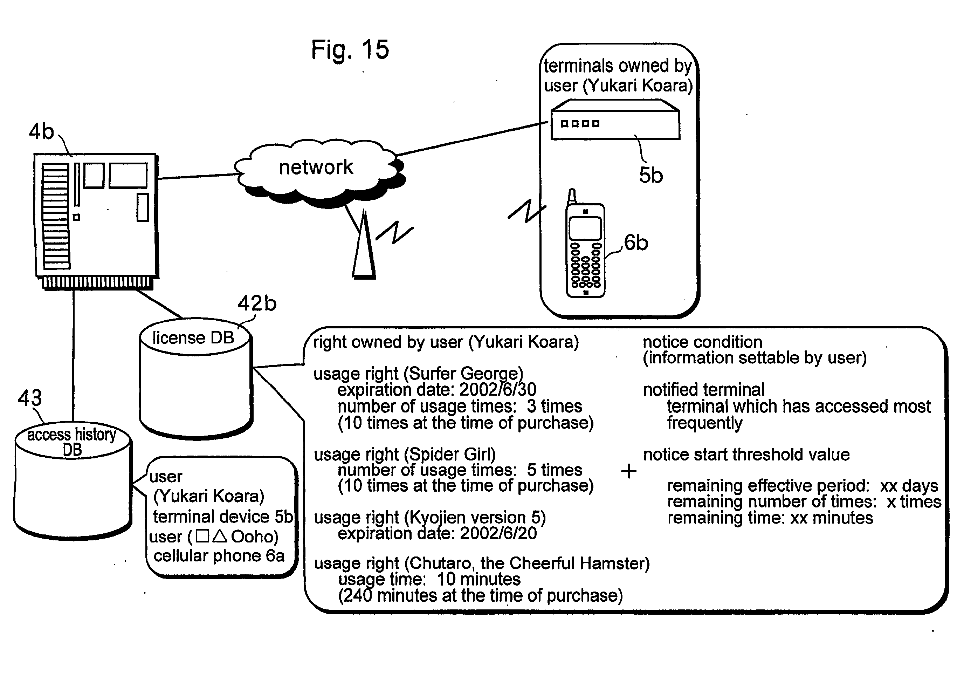

Fig. 15 is a diagram that shows one of the characteristics of the license management system 1b that is realized by interactions in the above Steps S11~S13. This figure shows the case where the server (the license management center terminal device 4b) determines the notified terminal to which the notice information is to be sent.

The license management center terminal device 4b of the license management system 1b sends the notice condition setting screen 481 (S12), and accepts the notified terminal specified by the user (the specified terminal, the terminal which has accessed most frequently, or the terminal which has accessed most recently) (S13). Then, the server (the license management center terminal device 4b) holds a history of access to itself in the access history DB 43 as well as the specified terminal, and dynamically determines the notified terminal to which the notice information is to be sent (the terminal which has accessed most recently or the terminal which has accessed most frequently) based on the access history.

Therefore, it becomes possible to dynamically determine the terminal based on the access history information of the server, in accordance with the user's circumstances such as the number of terminals owned by the user or the availability of these terminals.

In an embodiment, the access history is held for one month. However, the holding period may be changed, for one year, for instance. Also, it may be configured so as to obtain the access frequency per time period or the access frequency per season by taking the statistics per time period or per season, specify the terminal which has accessed most recently and the terminal which has accessed most frequently per time period or per season, and then, determine the terminal which gives the notice most available to the member user.

Also, in an embodiment, the same notified terminal is specified for all the contents. However, the notified terminal may be specified per content to be used.

Furthermore, the notice may be given to all the terminals owned by the user. In this case, the member user sees the same notice again and again, so the user has a bigger burden. Also, the other person such as the user's family member may see the notice and exercise the remaining usage right before the user does.

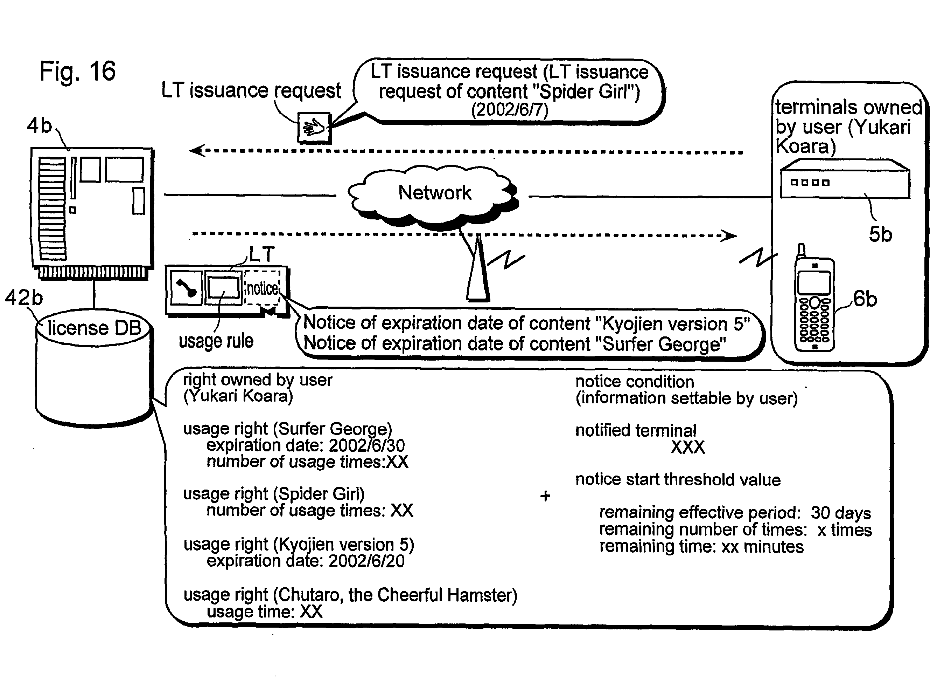

Fig. 16 is a diagram that shows one of the characteristics of the license management system 1b that is realized by interactions in the above Steps S17 and S18. This figure shows the case where the all the usage rights whose remaining amount reaches the threshold values and expiration date will come soon among the user's usage rights managed by the server (the license management center terminal device 4b) are embedded in the LT, regardless of the rights of the LT, and notified.

Upon receiving the LT issuance request of the content "Spider Girl", the license management center terminal device 4b of the license management system 1b embeds all the rights, including the rights not for the LT, which are owned by the user and will expire soon, into the LT.

Therefore, the opportunities of the notice by the LT increase, while the trouble of sending e-mail can be saved. Also, the user can learn all the usage rights whose remaining amount has reached the threshold values among the rights owned by the user at once.

It goes without saying that all the rights which are owned by the user and will expire soon are notified by e-mail.

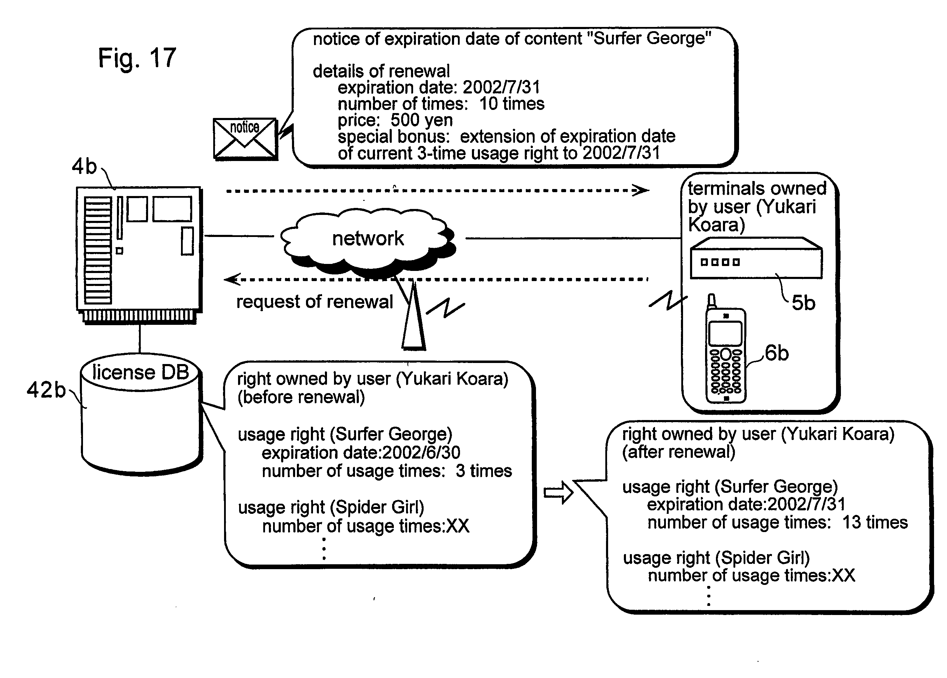

Fig. 17 is a diagram that shows one of the characteristics of the license management system 1b that is realized by interactions in the above Step S24. This figure shows the case where the right is renewed in response to the notice of the expiration date.

The license management center terminal device 4b of the license management system 1b, upon receiving the request of renewing the content "Surfer George", extends the effective period of the remaining right, that is, 3 times, before the renewal, up to the July 31, 2002, which is the same period for the renewed right, with free of charge.

Accordingly, the user can get an advantage of extending the effective period with free of charge, the manager of the server can make a profit on the renewal and increase the business opportunities. Furthermore, all the manager of the server has to do is reflect the special bonus on the renewed information without adding the record for the special bonus. Therefore, the management costs can be reduced.

In an embodiment, the notice information preparation unit 46b compares the remaining number of usage times and the remaining usage time with the threshold values so as to detect the timing of the notice. However, the license information examination unit 47 may detect it.

Also, in an embodiment, the threshold value is specified on the same date in both cases of the notice by sending the notice information embedded in the license ticket and the notice by other methods. However, it may be specified on different dates.

Also, the remaining effective period is notified, but the remaining number of usage times and the remaining usage time may also be notified, and the threshold values for the number of usage times and the usage time may be specified.

Furthermore, the notice information is sent along with the LT only when the terminal which makes the LT issuance request (terminal A) is identical to the terminal which is specified as a destination of the notice information (terminal B). However, the present invention is not limited to this, and the notice information may be sent when the user who owns the terminal A is identical to the user who owns the terminal B (the user ID corresponding to the client ID of the terminal A is identical to that of the terminal B).

### Industrial Applicability

As described above, the content usage right management device according to the present invention can be used as a computer device such as a personal computer or a server device that issues a license ticket for enabling usage of a content to a terminal of a user who purchased a usage right for using the content and manages the remaining amount of the usage right of the content per user.

## Claims

1. A content usage right management device that issues a license ticket for enabling usage of a content to a terminal of a user who purchased usage right for using the content and manages remaining amount of the content usage right per user, the content usage right management device comprising:
a license information memorizing unit operable to memorize, per content the usage right of which was purchased by each user, license information that includes the remaining amount of the usage right and identifies details of the usage right,
**characterized in that** it further comprises:
a notice information generating unit operable to generate notice information indicating that the remaining amount of the usage right is getting low when the remaining amount of the usage right becomes a predetermined threshold value or less;
a first notice destination storing unit operable to store, into the license information memorized in the license information memorizing unit, an identifier of at least one terminal device which uses a content under the license information, as a destination to which notice information is to be sent;
a first notifying unit operable to determine a terminal device, the identifier of which is stored into the license information by the first notice destination storing unit, as a destination to which the notice information is to be sent, and notify the determined terminal device of the notice information; and
an access history memorizing unit operable to memorize an access history per terminal device of a plurality of terminal devices owned by each user,
wherein the first notifying unit dynamically determines the terminal device, the identifier of which is stored into the license information by the first notice destination storing unit, based on the access history per terminal device memorized in the access history memorizing unit.

2. The content usage right management device according to claim 1,
wherein the first notifying unit determines the terminal device which has accessed the content usage right management device most frequently.

3. The content usage right management device according to claim 1,
wherein the first notifying unit determines the terminal device which has accessed the content usage right management device most recently.

4. The content usage right management device according to claim 1,
wherein the first notifying unit embeds notice information in the license ticket and notifies of the notice information.

5. The content usage right management device according to claim 1, further comprising a first threshold value storing unit operable to store the threshold value for the remaining amount of the usage right, as a first threshold value, in the license information memorized in the license information memorizing unit,
wherein the notice information generating unit generates the notice information when the remaining amount of the usage right becomes the first threshold value or less.

6. The content usage right management device according to claim 5,
wherein the first threshold value is remaining time up to an expiration date, and
the content usage right management device further comprises a remaining time calculating unit operable to calculate the remaining time up to the expiration date per license information of each user, based on the expiration date and the hour at that time, and
the notice information generating unit generates the notice information based on the remaining time up to the expiration date calculated by the remaining time calculating unit.

7. The content usage right management device according to claim 5,
wherein the first threshold value is a remaining number of usage times, and
the notice information generating unit generates the notice information based on the remaining number of usage times.

8. The content usage right management device according to claim 5,
wherein the first threshold value is remaining usage time, and
the notice information generating unit generates the notice information based on the remaining usage time.

9. The content usage right management device according to claim 1 further comprising a second threshold value storing unit operable to store a threshold value for the remaining amount of the usage right specified by a user, as a second threshold value, in the license information memorized in the license information memorizing unit,
wherein the notice information generating unit generates the notice information when the remaining amount of the usage right becomes the second threshold value or less.

10. The content usage right management device according to claim 9,
wherein the second threshold value is remaining time up to an expiration date, and
the content usage right management device further comprises a remaining time calculating unit operable to calculate remaining time up to an expiration date per license information of each user based on the expiration date and the hour at that time, and
the notice information generating unit generates the notice information based on the remaining time up to the expiration date calculated by the remaining time calculating unit.

11. The content usage right management device according to claim 9,
wherein the second threshold value is a remaining number of usage times, and
the notice information generating unit generates the notice information based on the remaining number of usage times.

12. The content usage right management device according to claim 9,
wherein the second threshold value is remaining usage time, and
the notice information generating unit generates the notice information based on the remaining usage time.

13. The content usage right management device according to claim 1,
wherein the threshold value which is set when the notice information is embedded in the license ticket and notified is different from the threshold value which is set when the notice information is notified in another way.

14. The content usage right management device according to claim 1, further comprising a first renewing unit operable to individually renew a usage right indicated by license information of a user memorized in the license information memorizing unit, in response to a request of renewing the usage right from the user.

15. The content usage right management device according to claim 14,
wherein, when the first renewing unit receives a request of issuing a license ticket from a user who is notified the notice information after a lapse of the user's usage right, the first renewing unit considers that the user made a request of renewing the usage right before the lapse of the usage right and renews the usage right individually.

16. The content usage right management device according to claim 1, further comprising a second usage right renewing unit operable to renew details of a usage right to be changed as offered for all license purchasers memorized in the license information memorizing unit, in response to the offer of changing the details of the usage right from a content provider.

17. A content usage right management method for issuing a license ticket enabling usage of a content to a terminal of a user who purchased a usage right for using the content and managing remaining amount of the usage right of the content usage right per user, the management method including:
a license information storing step for storing, per content, the usage right of which was purchased by each user, license information that includes the remaining amount of the usage right and identifies details of the usage right, in a license information memorizing unit,
**characterized in that** it further includes:
a notice information generating step for generating notice information indicating that the remaining amount of the usage right is getting low when the remaining amount of the usage right becomes a predetermined threshold value or less;
a first notice destination storing step for storing, into the license information memorized in the license information memorizing unit, an identifier of at least one terminal device which uses a content under the license information, as a destination to which notice information is to be sent;
a first notifying step for determining a terminal device, the identifier of which is stored into the license information by the first notice destination storing step, as a destination to which the notice information is to be sent, and notifying the determined terminal device of the notice information; and
an access history memorizing step for memorizing an access history, per terminal device of a plurality of terminal devices owned by each user, into an access history memorizing unit,
wherein in the first notifying step, the terminal device, the identifier of which is stored into the license information by the first notice destination storing step, is dynamically determined based on the access history per terminal device memorized in the access history memorizing unit.

18. The content usage right management method according to claim 17, further including a first threshold value storing step for storing a threshold value for the remaining amount of the usage right, as a first threshold value, in the license information memorized in the license information memorizing unit,
wherein in the notice information generating step, the notice information is generated when the remaining amount of the usage right becomes the first threshold value or less.

19. The content usage right management method according to claim 17, further including a second threshold value storing step for storing a threshold value for the remaining amount of the usage right specified by a user, as a second threshold value, in the license information memorized in the license information memorizing unit,
wherein in the notice information generating step, the notice information is generated when the remaining amount of the usage right becomes the second threshold value or less.

20. A program for issuing a license ticket for enabling usage of a content to a terminal of a user who purchased a usage right for using the content and managing remaining amount of the content usage right per user, the program causing a computer to execute the steps of the method according to claim 17.

21. A program for issuing a license ticket for enabling usage of a content to a terminal of a user who purchased a usage right for using the content and managing remaining amount of the content usage right per user, the program causing a computer to execute the steps of the method according to claim 18.

22. A program for issuing a license ticket for enabling usage of a content to a terminal of a user who purchased a usage right for using the content and managing remaining amount of the content usage right per user, the program causing a computer to execute the steps of the method according to claim 19.

## Patentansprüche

1. Inhaltsnutzungsrechtsverwaltungsvorrichtung, die ein Genehmigungsticket zum Ermöglichen der Nutzung eines Inhalts an ein Endgerät eines Nutzers ausgibt, der ein Nutzungsrecht zur Nutzung des Inhalts erworben hat, und die den verbleibenden Umfang des Inhaltsnutzungsrechts für den Nutzer verwaltet, mit:
einer Genehmigungsinformationen-Speichereinheit, die so betreibbar ist, dass sie für den Inhalt, dessen Nutzungsrecht von einem einzelnen Nutzer erworben worden ist, Genehmigungsinformationen speichert, die den verbleibenden Nutzungsrechtsumfang enthalten und Einzelheiten des Nutzungsrechts angeben,
**dadurch gekennzeichnet, dass** sie weiterhin Folgendes aufweist:
eine Benachrichtigungsinformationen-Erzeugungseinheit, die so betreibbar ist, dass sie Benachrichtigungsinformationen erzeugt, die angeben, dass der verbleibende Nutzungsrechtsumfang gering wird, wenn der verbleibende Nutzungsrechtsumfang einen vorgegebenen Schwellenwert erreicht oder unterschreitet;
eine erste Benachrichtigungsziel-Speichereinheit, die so betreibbar ist, dass sie in den Genehmigungsinformationen, die in der Genehmigungsinformationen-Speichereinheit gespeichert sind, einen Identifikator mindestens eines Endgeräts speichert, das einen Inhalt gemäß den Genehmigungsinformationen nutzt, als Ziel, an das die Benachrichtigungsinformationen gesendet werden sollen;
eine erste Benachrichtigungseinheit, die so betreibbar ist, dass sie ein Endgerät, dessen Identifikator von der ersten Benachrichtigungsziel-Speichereinheit in den Genehmigungsinformationen gespeichert wird, als Ziel festlegt, an das die Benachrichtigungsinformationen gesendet werden sollen, und dem festgelegten Endgerät die Benachrichtigungsinformationen mitteilt; und
eine Zugriffshistorien-Speichereinheit, die so betreibbar ist, dass sie eine Zugriffshistorie für jedes Endgerät von mehreren Endgeräten speichert, die ein einzelner Nutzer besitzt,
wobei die erste Benachrichtigungseinheit das Endgerät, dessen Identifikator von der ersten Benachrichtigungsziel-Speichereinheit in den Genehmigungsinformationen gespeichert wird, aufgrund der Zugriffshistorie für jedes in der Zugriffshistorien-Speichereinheit gespeicherte Endgerät dynamisch festlegt.

2. Inhaltsnutzungsrechtsverwaltungsvorrichtung nach Anspruch 1, **dadurch gekennzeichnet, dass** die erste Benachrichtigungseinheit das Endgerät ermittelt, das am häufigsten auf die Inhaltsnutzungsrechtsverwaltungsvorrichtung zugegriffen hat.

3. Inhaltsnutzungsrechtsverwaltungsvorrichtung nach Anspruch 1, **dadurch gekennzeichnet, dass** die erste Benachrichtigungseinheit das Endgerät ermittelt, das zuletzt auf die Inhaltsnutzungsrechtsverwaltungsvorrichtung zugegriffen hat.

4. Inhaltsnutzungsrechtsverwaltungsvorrichtung nach Anspruch 1, **dadurch gekennzeichnet, dass** die erste Benachrichtigungseinheit die Benachrichtigungsinformationen in das Genehmigungsticket einfügt und die Benachrichtigungsinformationen mitteilt.

5. Inhaltsnutzungsrechtsverwaltungsvorrichtung nach Anspruch 1, die weiterhin eine erste Schwellenwert-Speichereinheit aufweist, die so betreibbar ist, dass sie den Schwellenwert für den verbleibenden Nutzungsrechtsumfang als ersten Schwellenwert in den in der Genehmigungsinformationen-Speichereinheit gespeicherten Genehmigungsinformationen speichert,
wobei die Benachrichtigungsinformationen-Erzeugungseinheit die Benachrichtigungsinformationen erzeugt, wenn der verbleibende Nutzungsrechtsumfang den ersten Schwellenwert erreicht oder unterschreitet.

6. Inhaltsnutzungsrechtsverwaltungsvorrichtung nach Anspruch 5, **dadurch gekennzeichnet, dass**
der erste Schwellenwert die verbleibende Zeit bis zu einem Ablaufdatum ist,
die Inhaltsnutzungsrechtsverwaltungsvorrichtung weiterhin eine Verbleibende-Zeit-Berechnungseinheit aufweist, die so betreibbar ist, dass sie die verbleibende Zeit bis zu dem Ablaufdatum für die Genehmigungsinformationen jedes Nutzers aufgrund des Ablaufdatums und der Uhrzeit zu diesem Zeitpunkt berechnet, und
die Benachrichtigungsinformationen-Erzeugungseinheit die Benachrichtigungsinformationen aufgrund der verbleibenden Zeit bis zu dem von der Verbleibende-Zeit-Berechnungseinheit berechneten Ablaufdatum erzeugt.

7. Inhaltsnutzungsrechtsverwaltungsvorrichtung nach Anspruch 5, **dadurch gekennzeichnet, dass**
der erste Schwellenwert eine verbleibende Nutzungshäufigkeit ist und
die Benachrichtigungsinformationen-Erzeugungseinheit die Benachrichtigungsinformationen aufgrund der verbleibenden Nutzungshäufigkeit erzeugt.

8. Inhaltsnutzungsrechtsverwaltungsvorrichtung nach Anspruch 5, **dadurch gekennzeichnet, dass**
der erste Schwellenwert die verbleibende Nutzungszeit ist und
die Benachrichtigungsinformationen-Erzeugungseinheit die Benachrichtigungsinformationen aufgrund der verbleibenden Nutzungszeit erzeugt.

9. Inhaltsnutzungsrechtsverwaltungsvorrichtung nach Anspruch 1, die weiterhin eine zweite Schwellenwert-Speichereinheit aufweist, die so betreibbar ist, dass sie einen Schwellenwert für den verbleibenden Nutzungsrechtsumfang, der von einem Nutzer festgelegt wird, als zweiten Schwellenwert in den in der Genehmigungsinformationen-Speichereinheit gespeicherten Genehmigungsinformationen speichert,
wobei die Benachrichtigungsinformationen-Erzeugungseinheit die Benachrichtigungsinformationen erzeugt, wenn der verbleibende Nutzungsrechtsumfang den zweiten Schwellenwert erreicht oder unterschreitet.

10. Inhaltsnutzungsrechtsverwaltungsvorrichtung nach Anspruch 9, **dadurch gekennzeichnet, dass**
der zweite Schwellenwert die verbleibende Zeit bis zu einem Ablaufdatum ist,
die Inhaltsnutzungsrechtsverwaltungsvorrichtung weiterhin eine Verbleibende-Zeit-Berechnungseinheit aufweist, die so betreibbar ist, dass sie die verbleibende Zeit bis zu dem Ablaufdatum für die Genehmigungsinformationen jedes Nutzers aufgrund des Ablaufdatums und der Uhrzeit zu diesem Zeitpunkt berechnet, und
die Benachrichtigungsinformationen-Erzeugungseinheit die Benachrichtigungsinformationen aufgrund der verbleibenden Zeit bis zu dem von der Verbleibende-Zeit-Berechnungseinheit berechneten Ablaufdatum erzeugt.

11. Inhaltsnutzungsrechtsverwaltungsvorrichtung nach Anspruch 9, **dadurch gekennzeichnet, dass**
der zweite Schwellenwert eine verbleibende Nutzungshäufigkeit ist und
die Benachrichtigungsinformationen-Erzeugungseinheit die Benachrichtigungsinformationen aufgrund der verbleibenden Nutzungshäufigkeit erzeugt.

12. Inhaltsnutzungsrechtsverwaltungsvorrichtung nach Anspruch 9, **dadurch gekennzeichnet, dass**
der zweite Schwellenwert die verbleibende Nutzungszeit ist und
die Benachrichtigungsinformationen-Erzeugungseinheit die Benachrichtigungsinformationen aufgrund der verbleibenden Nutzungszeit erzeugt.

13. Inhaltsnutzungsrechtsverwaltungsvorrichtung nach Anspruch 1, **dadurch gekennzeichnet, dass** der Schwellenwert, der festgelegt wird, wenn die Benachrichtigungsinformationen in das Genehmigungsticket eingefügt werden und mitgeteilt werden, von dem Schwellenwert verschieden ist, der festgelegt wird, wenn die Benachrichtigungsinformationen auf eine andere Weise mitgeteilt werden.

14. Inhaltsnutzungsrechtsverwaltungsvorrichtung nach Anspruch 1, die weiterhin eine erste Erneuerungseinheit aufweist, die so betreibbar ist, dass sie ein Nutzungsrecht, das von den Genehmigungsinformationen eines Nutzers, die in der Genehmigungsinformationen-Speichereinheit gespeichert sind, in Reaktion auf eine Anforderung zum Erneuern des Nutzungsrechts von dem Nutzer individuell erneuert.

15. Inhaltsnutzungsrechtsverwaltungsvorrichtung nach Anspruch 14, **dadurch gekennzeichnet, dass**, wenn die erste Erneuerungseinheit eine Anforderung zum Ausgeben eines Genehmigungstickets von einem Nutzer empfängt, dem die Benachrichtigungsinformationen nach dem Ablauf des Nutzungsrechts des Nutzers mitgeteilt werden, die erste Erneuerungseinheit annimmt, dass der Nutzer die Erneuerung des Nutzungsrechts angefordert hat, bevor das Nutzungsrecht abgelaufen ist, und das Nutzungsrecht individuell erneuert.

16. Inhaltsnutzungsrechtsverwaltungsvorrichtung nach Anspruch 1, die weiterhin eine zweite Nutzungsrechtserneuerungseinheit aufweist, die so betreibbar ist, dass sie in der Genehmigungsinformationen-Speichereinheit gespeicherte Einzelheiten eines Nutzungsrechts, die nach einem Angebot an alle Genehmigungserwerber geändert werden sollen, in Reaktion auf das Angebot zum Ändern der Einzelheiten des Nutzungsrechts von einem Inhaltsprovider erneuert.

17. Inhaltsnutzungsrechtsverwaltungsverfahren zum Ausgeben eines Genehmigungstickets, das die Nutzung eines Inhalts ermöglicht, an ein Endgerät eines Nutzers, der ein Nutzungsrecht zur Nutzung des Inhalts erworben hat, und zum Verwalten eines verbleibenden Umfangs des Inhaltsnutzungsrechts für den Nutzer, mit:
einem Genehmigungsinformationen-Speicherschritt zum Speichern von Genehmigungsinformationen, die den verbleibenden Nutzungsrechtsumfang enthalten und Einzelheiten des Nutzungsrechts angeben, für den Inhalt, dessen Nutzungsrecht von dem einzelnen Nutzer erworben worden ist, in einer Genehmigungsinformationen-Speichereinheit;
**dadurch gekennzeichnet, dass** es weiterhin Folgendes aufweist:
einen Benachrichtigungsinformationen-Erzeugungsschritt zum Erzeugen von Benachrichtigungsinformationen, die angeben, dass der verbleibende Nutzungsrechtsumfang gering wird, wenn der verbleibende Nutzungsrechtsumfang einen vorgegebenen Schwellenwert erreicht oder unterschreitet;
einen ersten Benachrichtigungsziel-Speicherschritt zum Speichern eines Identifikators mindestens eines Endgeräts, das einen Inhalt gemäß den Genehmigungsinformationen nutzt, als Ziel, an das die Benachrichtigungsinformationen gesendet werden sollen, in den Genehmigungsinformationen, die in der Genehmigungsinformationen-Speichereinheit gespeichert sind;
einen ersten Benachrichtigungsschritt zum Festlegen eines Endgeräts, dessen Identifikator mit dem ersten Benachrichtigungsziel-Speicherschritt in den Genehmigungsinformationen gespeichert wird, als Ziel, an das die Benachrichtigungsinformationen gesendet werden sollen, und zum Mitteilen der Benachrichtigungsinformationen an das festgelegte Endgerät und
einen Zugriffshistorien-Speicherschritt zum Speichern einer Zugriffshistorie für jedes Endgerät von mehreren Endgeräten, die ein einzelner Nutzer besitzt, in einer Zugriffshistorien-Speichereinheit,
wobei in dem ersten Benachrichtigungsschritt das Endgerät, dessen Identifikator mit dem ersten Benachrichtigungsziel-Speicherschritt in den Genehmigungsinformationen gespeichert wird, aufgrund der Zugriffshistorie für jedes Endgerät, die in der Zugriffshistorien-Speichereinheit gespeichert wird, dynamisch festgelegt wird.

18. Inhaltsnutzungsrechtsverwaltungsverfahren nach Anspruch 17, das weiterhin einen ersten Schwellenwert-Speicherschritt zum Speichern eines Schwellenwerts für den verbleibenden Nutzungsrechtsumfang als ersten Schwellenwert in den in der Genehmigungsinformationen-Speichereinheit gespeicherten Genehmigungsinformationen aufweist,
wobei in dem Benachrichtigungsinformationen-Erzeugungsschritt die Benachrichtigungsinformationen erzeugt werden, wenn der verbleibende Nutzungsrechtsumfang den ersten Schwellenwert erreicht oder unterschreitet.

19. Inhaltsnutzungsrechtsverwaltungsverfahren nach Anspruch 17, das weiterhin einen zweiten Schwellenwert-Speicherschritt zum Speichern eines Schwellenwerts für den verbleibenden Nutzungsrechtsumfang, der von einem Nutzer festgelegt wird, als zweiten Schwellenwert in den in der Genehmigungsinformationen-Speichereinheit gespeicherten Genehmigungsinformationen aufweist,
wobei in dem Benachrichtigungsinformationen-Erzeugungsschritt die Benachrichtigungsinformationen erzeugt werden, wenn der verbleibende Nutzungsrechtsumfang den zweiten Schwellenwert erreicht oder unterschreitet.

20. Programm zum Ausgeben eines Genehmigungstickets zum Ermöglichen der Nutzung eines Inhalts an ein Endgerät eines Nutzers, der ein Nutzungsrecht zur Nutzung des Inhalts erworben hat, und zum Verwalten des verbleibenden Umfangs des Inhaltsnutzungsrechts für den Nutzer, wobei das Programm einen Computer die Schritte des Verfahrens nach Anspruch 17 ausführen lässt.

21. Programm zum Ausgeben eines Genehmigungstickets zum Ermöglichen der Nutzung eines Inhalts an ein Endgerät eines Nutzers, der ein Nutzungsrecht zur Nutzung des Inhalts erworben hat, und zum Verwalten des verbleibenden Umfangs des Inhaltsnutzungsrechts für den Nutzer, wobei das Programm einen Computer die Schritte des Verfahrens nach Anspruch 18 ausführen lässt.

22. Programm zum Ausgeben eines Genehmigungstickets zum Ermöglichen der Nutzung eines Inhalts an ein Endgerät eines Nutzers, der ein Nutzungsrecht zur Nutzung des Inhalts erworben hat, und zum Verwalten des verbleibenden Umfangs des Inhaltsnutzungsrechts für den Nutzer, wobei das Programm einen Computer die Schritte des Verfahrens nach Anspruch 19 ausführen lässt.

## Revendications

1. Dispositif de gestion des droits d'utilisation de contenu qui émet un ticket de licence afin de permettre l'utilisation d'un contenu à un terminal d'un utilisateur qui a acheté le droit d'utilisation pour l'utilisation du contenu et gère la quantité restante du droit d'utilisation du contenu par utilisateur, le dispositif de gestion des droits d'utilisation de contenu comprenant :
une unité de mémorisation d'informations de licence pouvant être mise en oeuvre pour mémoriser, par contenu, dont le droit d'utilisation a été acheté par chaque utilisateur, des informations de licence qui comprennent la quantité restante du droit d'utilisation et identifie des détails du droit d'utilisation,
**caractérisé en ce qu'**il comprend en outre :
une unité de génération d'informations de notification pouvant être mise en oeuvre pour générer des informations de notification indiquant que la quantité restante du droit d'utilisation devient faible lorsque la quantité restante du droit d'utilisation devient une valeur de seuil prédéterminée ou moins,
une première unité de mémorisation de destination de notification pouvant être mise en oeuvre pour mémoriser, dans les informations de licence mémorisées, dans l'unité de mémorisation d'informations de licence, un identificateur d'au moins un dispositif terminal qui utilise un contenu sous les informations de licence, en tant que destination à laquelle les informations de notification doivent être envoyées,
une première unité de notification pouvant être mise en oeuvre pour déterminer un dispositif terminal, dont l'identificateur est mémorisé dans les informations de licence par la première unité de mémorisation de destination de notification, en tant que destination à laquelle les informations de notification doivent être envoyées, et pour notifier au dispositif terminal des informations de notifications et,
une unité de mémorisation d'historique d'accès pouvant être mis en oeuvre pour mémoriser un historique d'accès par dispositif terminal d'une pluralité de dispositifs terminaux détenus par chaque utilisateur,
dans lequel la première unité de notification détermine de manière dynamique le dispositif terminal dont l'identificateur est mémorisé dans les informations de licence par la première unité de mémorisation de destination de notification, sur la base de l'historique d'accès par dispositif terminal mémorisé dans l'unité de mémorisation d'historique d'accès.

2. Dispositif de gestion des droits d'utilisation de contenu selon la revendication 1,
dans lequel la première unité de notification détermine le dispositif terminal qui a accédé au dispositif de gestion des droits d'utilisation de contenu le plus fréquemment.

3. Dispositif de gestion des droits d'utilisation de contenu selon la revendication 1,
dans lequel la première unité de notification détermine le dispositif terminal qui a accédé au dispositif de gestion des droits d'utilisation de contenu le plus récemment.

4. Dispositif de gestion des droits d'utilisation de contenu selon la revendication 1,
dans lequel la première unité de notification incorpore des informations de notification dans le ticket de licence et notifie les informations de notification.

5. Dispositif de gestion des droits d'utilisation de contenu selon la revendication 1, comprenant en outre une première unité de mémorisation de valeur de seuil pouvant être mise en oeuvre pour mémoriser la valeur de seuil pour la quantité restante de droit d'utilisation, en tant que première valeur de seuil, dans les informations de licence mémorisées dans l'unité de mémorisation d'informations de licence,
où l'unité de génération d'informations de notification génère les informations de notification lorsque la quantité restante de droit d'utilisation devient la première valeur de seuil ou moins.

6. Dispositif de gestion des droits d'utilisation de contenu selon la revendication 5,
dans lequel la première valeur de seuil est le temps restant jusqu'à une date d'expiration, et
le dispositif de gestion des droits d'utilisation de contenu comprend en outre une unité de calcul de temps restant pouvant être mise en oeuvre pour calculer le temps restant jusqu'à la date d'expiration par informations de licence de chaque utilisateur, sur la base de la date d'expiration et de l'heure à ce moment, et
l'unité de génération d'informations de notification génère les informations de notification sur la base du temps restant jusqu'à la date d'expiration calculé par l'unité de calcul de temps restant.

7. Dispositif de gestion des droits d'utilisation de contenu selon la revendication 5,
dans lequel la première valeur de seuil est un nombre restant d'utilisations, et
l'unité de génération d'informations de notification génère les informations de notification sur la base du nombre restant d'utilisations.

8. Dispositif de gestion des droits d'utilisation de contenu selon la revendication 5,
dans lequel la première valeur de seuil est un temps d'utilisation restant, et
l'unité de génération d'informations de notification génère les informations de notification sur la base du temps d'utilisation restant.

9. Dispositif de gestion des droits d'utilisation de contenu selon la revendication 1,
comprenant en outre une seconde unité de mémorisation de valeur de seuil pouvant être mise en oeuvre pour mémoriser une valeur de seuil pour la quantité restante du droit d'utilisation spécifiée par un utilisateur, en tant que seconde valeur de seuil, dans les informations de licence mémorisées dans l'unité de mémorisation d'informations de licence,
dans lequel l'unité de génération d'informations de notification génère les informations de notification lorsque la quantité restante du droit d'utilisation devient la seconde valeur de seuil ou moins.

10. Dispositif de gestion des droits d'utilisation de contenu selon la revendication 9,
dans lequel la seconde valeur de seuil est le temps restant jusqu'à la date d'expiration, et
le dispositif de gestion des droits d'utilisation de contenu comprend en outre une unité de calcul de temps restant pouvant être mise en oeuvre pour calculer le temps restant jusqu'à la date d'expiration par informations de licence de chaque utilisateur, sur la base de la date d'expiration et de l'heure à ce moment, et
l'unité de génération d'informations de notification génère les informations de notification sur la base du temps restant jusqu'à la date d'expiration calculé par l'unité de calcul de temps restant.

11. Dispositif de gestion des droits d'utilisation de contenu selon la revendication 9,
dans lequel la seconde valeur de seuil est un nombre restant d'utilisations, et
l'unité de génération d'informations de notification génère les informations de notification sur la base du nombre restant d'utilisations.

12. Dispositif de gestion des droits d'utilisation de contenu selon la revendication 9,
dans lequel la seconde valeur de seuil est un temps d'utilisation restant, et
l'unité de génération d'informations de notification génère les informations de notification sur la base du temps d'utilisation restant.

13. Dispositif de gestion des droits d'utilisation de contenu selon la revendication 1,
dans lequel la valeur de seuil, qui est établie lorsque les informations de notification sont incorporées dans le ticket de licence et notifiées, est différente de la valeur de seuil qui est établie lorsque les informations de notification sont notifiées d'une autre manière.

14. Dispositif de gestion des droits d'utilisation de contenu selon la revendication 1, comprenant en outre une première unité de renouvellement pouvant être mise en oeuvre pour renouveler individuellement un droit d'utilisation indiqué par des informations de licence d'un utilisateur mémorisées dans l'unité de mémorisation d'informations de licence, en réponse à une demande de renouvellement du droit d'utilisation provenant de l'utilisateur.

15. Dispositif de gestion des droits d'utilisation de contenu selon la revendication 14,
dans lequel, lorsque la première unité de renouvellement reçoit une demande d'émission d'un ticket de licence provenant d'un utilisateur à qui on a notifié les informations de notification après une expiration du droit d'utilisation de l'utilisateur, la première unité de renouvellement considère que l'utilisateur a réalisé une demande de renouvellement du droit d'utilisation avant l'expiration du droit d'utilisation et renouvelle le droit d'utilisation individuellement.

16. Dispositif de gestion des droits d'utilisation de contenu selon la revendication 1, comprenant en outre une seconde unité de renouvellement de droit d'utilisation pouvant être mise en oeuvre pour renouveler les détails d'un droit d'utilisation devant être modifiés tels que fournis pour tous les acheteurs de licence mémorisés dans l'unité de mémorisation d'informations de licence, en réponse à l'offre de modification des détails du droit d'utilisation provenant d'un fournisseur de contenus.

17. Procédé de gestion des droits d'utilisation de contenu destiné à émettre un ticket de licence permettant l'utilisation d'un contenu à un terminal d'un utilisateur qui a acheté un droit d'utilisation pour l'utilisation du contenu et destiné à gérer la quantité restante du droit d'utilisation du droit d'utilisation du contenu par utilisateur, le procédé de gestion comprenant :
une étape de mémorisation d'informations de licence destinée à mémoriser, par contenu, dont le droit d'utilisation a été acheté par chaque utilisateur, des informations de licence qui comprennent la quantité restante du droit d'utilisation et identifie les détails du droit d'utilisation, dans une unité de mémorisation d'informations de licence,
**caractérisé en ce qu'**il comprend en outre :
une étape de génération d'informations de notification destinée à générer des informations de notification indiquant que la quantité restante du droit d'utilisation devient faible lorsque la quantité restante du droit d'utilisation devient une valeur de seuil prédéterminée ou moins,
une première étape de mémorisation de destination de notification destinée à mémoriser, dans les informations de licence mémorisées dans l'unité de mémorisation d'informations de licence, un identificateur d'au moins un dispositif terminal qui utilise un contenu sous les informations de licence, en tant que destination à laquelle les informations de notification doivent être envoyées,
une première étape de notification destinée à déterminer un dispositif terminal, dont l'identificateur est mémorisé dans les informations de licence par la première étape de mémorisation de destination de notification, en tant que destination à laquelle les informations de notification doivent être envoyées, et destinée à notifier au dispositif terminal déterminé les informations de notification, et
une étape de mémorisation d'historique d'accès destinée à mémoriser un historique d'accès, par dispositif terminal d'une pluralité de dispositifs terminaux détenus par chaque utilisateur, dans une unité de mémorisation d'historique d'accès,
où dans la première étape de notification, le dispositif terminal, dont l'identificateur est mémorisé dans les informations de licence par la première étape de mémorisation de destination de notification, est déterminé dynamiquement sur la base de l'historique d'accès par dispositif terminal mémorisé dans l'unité de mémorisation d'historique d'accès.

18. Procédé de gestion des droits d'utilisation de contenu selon la revendication 17, comprenant en outre une étape de mémorisation de première valeur de seuil destinée à mémoriser une valeur de seuil pour la quantité restante du droit d'utilisation, en tant que première valeur de seuil, dans les informations de licence mémorisées dans l'unité de mémorisation d'informations de licence,
où dans l'étape de génération d'informations de notification, les informations de notification sont générées lorsque la quantité restante de droit d'utilisation devient la première valeur de seuil ou moins.

19. Procédé de gestion des droits d'utilisation de contenu selon la revendication 17, comprenant en outre une étape de mémorisation de seconde valeur de seuil destinée à mémoriser une valeur de seuil pour la quantité restante de droit d'utilisation spécifiée par un utilisateur, en tant que seconde valeur de seuil, dans les informations de licence mémorisées dans l'unité de mémorisation d'informations de licence,
dans lequel, dans l'étape de génération d'informations de notification, les informations de notification sont générées lorsque la quantité restante de droit d'utilisation devient la seconde valeur de seuil ou moins.

20. Programme destiné à émettre un ticket de licence destiné à permettre l'utilisation d'un contenu à un terminal d'un utilisateur qui a acheté un droit d'utilisation pour l'utilisation du contenu et destiné à gérer la quantité restante du droit d'utilisation du contenu par utilisateur, le programme amenant un ordinateur à exécuter les étapes du procédé selon la revendication 17.

21. Programme destiné à émettre un ticket de licence destiné à permettre l'utilisation d'un contenu à un terminal d'un utilisateur qui a acheté un droit d'utilisation pour l'utilisation du contenu et destiné à gérer la quantité restante du droit d'utilisation du contenu par utilisateur, le programme amenant un ordinateur à exécuter les étapes du procédé selon la revendication 18.

22. Programme destiné à émettre un ticket de licence destiné à permettre l'utilisation d'un contenu à un terminal d'un utilisateur qui a acheté un droit d'utilisation pour l'utilisation du contenu et destiné à gérer la quantité restante du droit d'utilisation du contenu par utilisateur, le programme amenant un ordinateur à exécuter les étapes du procédé selon la revendication 19.
